# EUROPEAN PATENT SPECIFICATION

(11) **EP 4 520 192 B1**
(45) Date of publication and mention of the grant of the patent: **18.02.2026**
(21) Application number: 24198366.7
(22) Date of filing: 04.09.2024
(51) Int. Cl.: A24C 5/35, B65G 47/51

(54) **CONVEYOR ASSEMBLY AND METHOD FOR CONVEYING ARTICLES**
FÖRDEREINRICHTUNG UND VERFAHREN ZUM TRANSPORT VON GEGENSTÄNDEN
ASSEMBLAGE DE CONVOYEUR ET MÉTHODE DE TRANSPORT D'ARTICLES

(30) Priority: 06.09.2023 IT 202300018327
(43) Date of publication of application: 12.03.2025
(73) Proprietor: G.D S.p.A., 40133 Bologna (IT)
(72) Inventor: FERRARI, Michele, 40133 BOLOGNA (IT); CALZOLARI, Luca, 40133 BOLOGNA (IT)
(74) Representative: Studio Torta S.p.A.

(56) References cited:
- EP-A1- 0 838 165
- WO-A1-2019/073447
- US-A- 4 416 368

## Description

### TECHNICAL FIELD

The invention relates to a conveyor assembly and to a method of conveying articles.

### BACKGROUND OF THE INVENTION

Variable-capacity stores for cigarettes of the type described in patent EP581143 are known in the tobacco processing industry. These stores comprise a variable-length storage path having two conveying portions wound around one another on a common axis with turns having the same inclination; and a deflection device, which is configured to move the cigarettes from one portion to the other and is movable along both portions so as to change the overall length of the storage path.

EP838165 discloses a variable-capacity store comprising two helical conveyors arranged one above the other and connected by an intermediate element configured to transfer the products from the upper conveyor to the lower conveyor only by force of gravity. The two conveyors operate pneumatically.

This type of stores is affected by several drawbacks, among which the following ones are worth being mentioned.

The particular arrangement of the two conveying portions arranged one within the other not only makes the structure and construction of the stores particularly complex and expensive, but also significantly complicates maintenance operations.

In addition, the stores are not very ductile as it is not possible to provide input and output stations for the cylindrical articles arranged in desired positions (for example, one at the bottom and one at the top). More in particular, according to EP581143 and EP838165, the output of the articles is located at the bottom, a position that is not particularly convenient for the layouts of current machines (such as, for example, cigarette packer machines or combiners for combining filters and tobacco rods together) that can be found downstream of the stores.

Furthermore, pneumatic conveyors (like, for example, the ones disclosed in EP838165) are relatively not very delicate with articles (in particular, cigarettes). As a matter of fact, this type of conveyors can not only damage the articles with relative ease, but can also lead to the detachment and dispersion of particles (for example, tobacco) from the articles themselves.

In addition, conveying relatively delicate items (such as cigarettes) exclusively by gravity can lead to damage to the articles and/or to the creation of clogs.

WO2019073447A1 discloses a variable-capacity store for articles of the tobacco processing industry, comprising a conveyor assembly comprising a first conveyor having a substantially helical shape; a second conveyor with a substantially helical shape and arranged above the first conveyor; a linear transfer conveyor, designed to convey the articles upwards from the first conveyor to the second conveyor, having a variable length. This type of store suffers from some defects, among which there is the fact that clogging may occur due, for example, to the wrong orientation of some articles. This can lead to a standstill of the production even for a relatively long time (the greater the clogging, the longer it will take to solve it) and/or to a damaging of the articles.

US4416368 discloses a conveyor mechanism for transferring cylindrical articles, such as cigarettes, which incorporates a single conveyor belt that performs a transport from a lower level to a higher level. The surface used for the transport has a curved portion, unlike general-purpose conveyor belts, and a plurality of pins project from at least one side of the belt parallel to one another. In the area of the curved segment, said pins are held by a suitable means so that the belt maintains the curvature. Cigarettes or other cylindrical items are fed by the inner surface of the curved belt and by an auxiliary conveyor belt.

The object of the invention is to provide a conveyor assembly and a method for conveying articles, which are designed to at least partially overcome the drawbacks of the prior art and, at the same time, are inexpensive and easy to be manufactured/implemented.

### SUMMARY

In accordance with the invention, there are provided a conveyor assembly and a method of conveying articles as claimed in the accompanying independent claims and, preferably, in any one of the claims that directly or indirectly depend on the aforesaid independent claims.

### BRIEF DESCRIPTION OF THE DRAWINGS

The invention will now be described with reference to the accompanying drawings showing a non-limiting embodiment thereof, wherein:
- figures 1 to 5 are perspective views of successive operating configurations of a store comprising a conveyor assembly in accordance with the invention;
- figure 6 is a side view of a component of the conveyor assembly of figures 1-5;
- figure 7 is a cross section of a detail of the conveyor assembly of figures 1-5;
- figure 8 is a perspective view of the conveyor assembly of figures 1-5 with some details left out for greater clarity;

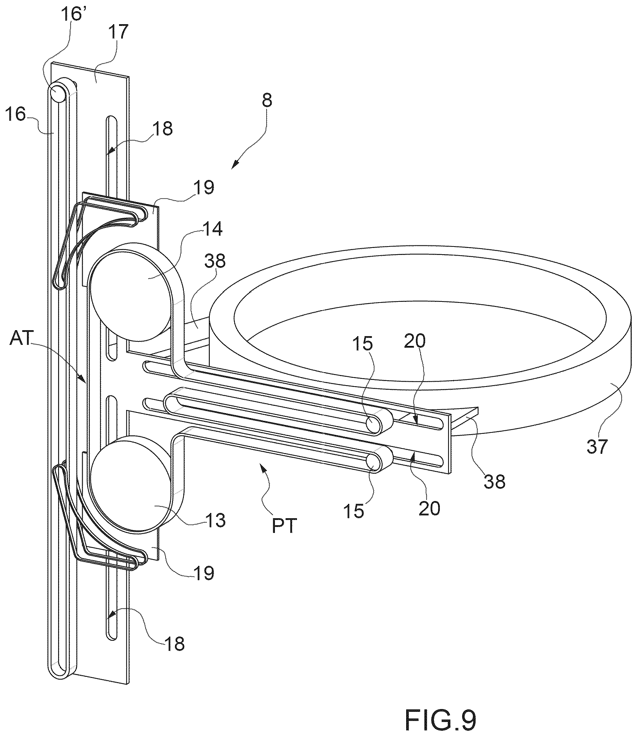

- figure 9 is a perspective view of the component of figure 6 connected to a further element;
- figure 10 is a perspective view of components of the conveyor assembly of figures 1-5;
- figure 11 is a perspective view of a detail of the conveyor assembly of figures 1-5;
- figure 12 is a perspective view from the bottom of a detail of figure 11;
- figures 13 and 14 are two perspective side views, with parts removed for greater clarity, of a part of the conveyor assembly of figures 1-5 in two different operating configurations;
- figure 15 shows, in a perspective view and on a larger scale, a detail of the part of figure 13 with some components removed for greater clarity and with some components having different proportions;
- figure 16 is a perspective top view of the detail of figure 15 with some further components removed for greater clarity;
- figure 17 shows a part of the detail of figure 16 on a larger scale;
- figure 18 shows, in a perspective view, from the side and with components removed for greater clarity, a part of the conveyor assembly of figures 1-5;
- figure 19 shows a part of figure 18 with components removed for greater clarity; and
- figure 20 shows a further part of figure 18 with components removed for greater clarity.

### DETAILED DESCRIPTION

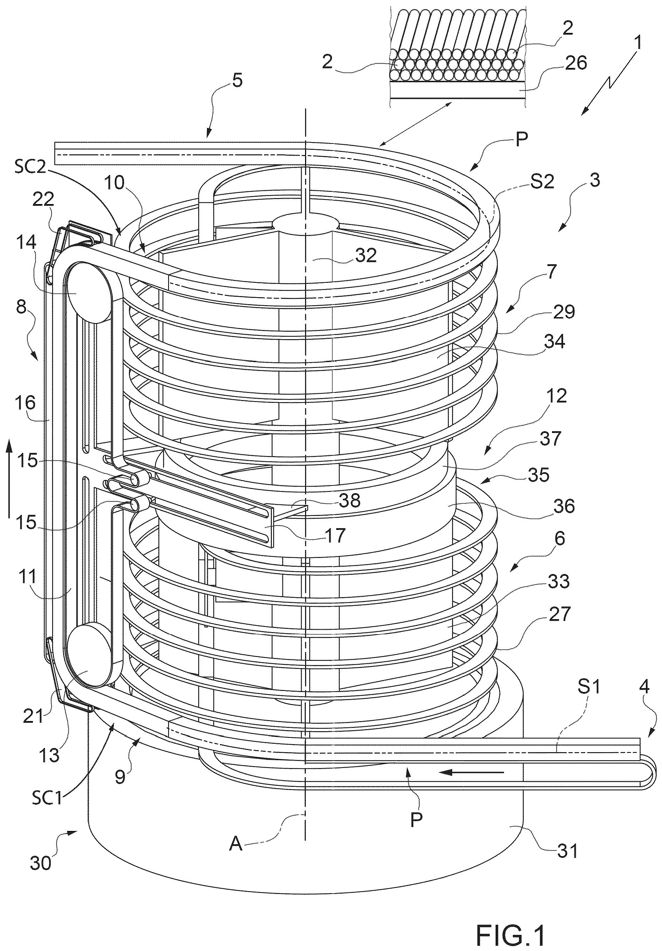

In the accompanying figures (see, in particular, figure 1), number 1 indicates, as a whole, a variable-capacity store for articles 2. The store comprises a conveyor assembly 3 for conveying the articles 2 (in particular, in a mass) from an input station 4 to an output station 5 along a path P (in particular, with a variable length).

In particular, the articles 2 have an oblong shape. More in particular, the conveyor assembly 3 is designed to convey the articles 2 in a mass (namely, in contact with one another and in several layers - see for example the enlargement of the upper part of figure 1) and, more in particular, crosswise (namely, in a transverse direction, in particular perpendicular to their longitudinal extension).

In particular, the articles 2 are substantially cylindrical articles, more in particular of the tobacco processing industry. For example, the articles 2 are cigarettes, cigarette filters, cigarette filter components (rods), tobacco rods, cartridges and/or components for electronic cigarettes. According to some specific and non-limiting embodiments, the articles 2 are cigarettes.

The conveyor assembly 3 comprises at least a transfer conveyor assembly 8, which is configured to convey the articles 2 along at least a transfer segment IS of the path P from an input 9 to an output 10.

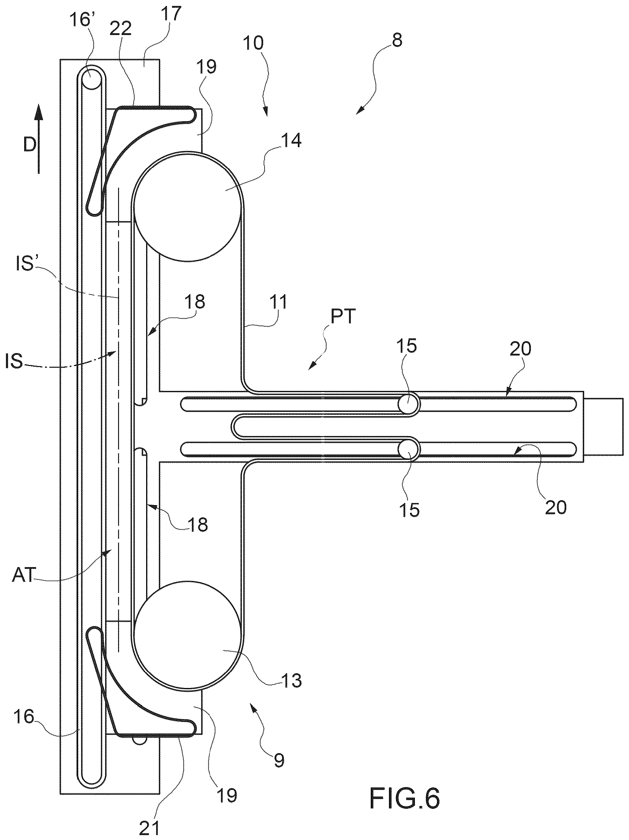

The transfer segment IS has at least an intermediate segment IS' with a variable length and extending at least partially upwards (in particular, substantially vertically) (see, in particular, figure 6). The transfer conveyor assembly 8 is configured to (at least partially) convey the articles 2 along the intermediate segment IS' in a given direction D.

The transfer conveyor assembly 8 comprises at least a transporting element (11) (in particular, a belt and/or a chain), which is configured to at least partially accompany the articles 2 along at least part of the intermediate segment IS' and has a front face (surface) configured to come into (be in) contact with at least part of the articles 2 and a rear face (surface) substantially opposite the front face (surface).

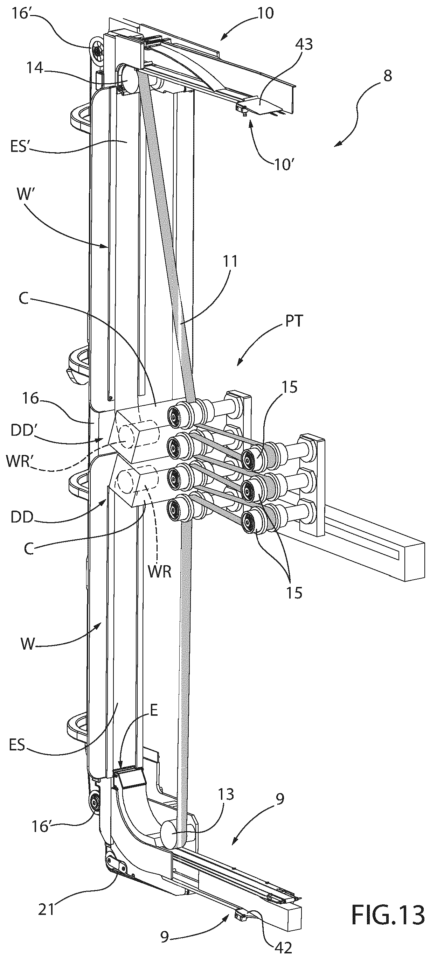

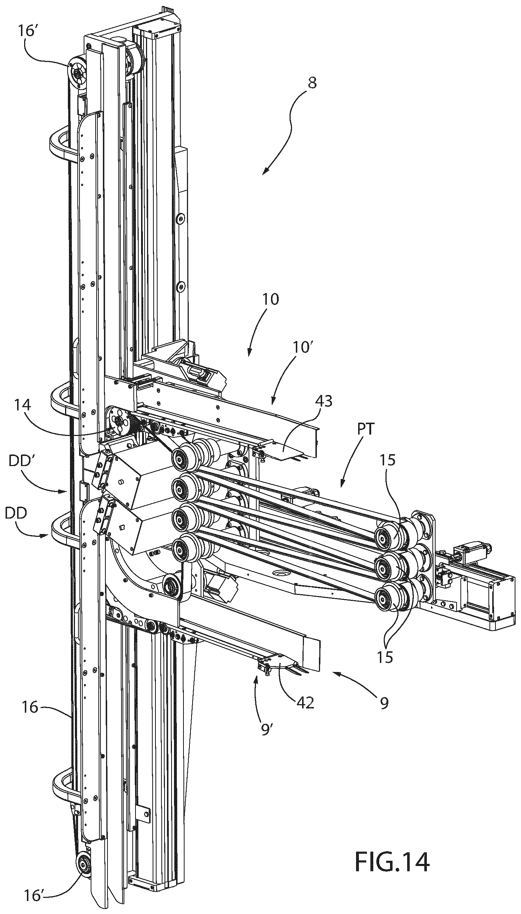

The transfer conveyor assembly 8 comprises at least a wall W, which is arranged behind (namely, on the side of the rear face of) the transporting element 11 (in particular, the wall W is configured to support the transporting element 11 from behind - on the side of the rear face) and has at least an oblong element ES (see figures 13-16), which extends along at least part of the intermediate segment IS' to support the transporting element 11 from behind (namely, on the side of the rear face of the transporting element 11) . Advantageously, though not necessarily, the oblong element ES is in contact with the rear face of the transporting element 11.

The oblong element ES has an end E connected to the input 9 or to the output 10 in a substantially integral manner. The conveyor assembly 3 further comprises a moving assembly 12, which is configured to move the input 9 and/or the output 10 so as to change a length of the intermediate segment IS' and (consequently - in particular, thanks to the movement of the input 9 or the output 10 to which it is linked) to move the end E in the given direction D.

The conveyor assembly 3 (in particular, the moving assembly 12) comprises a deflector device DD (see in particular figures 13, 14, 16 and from 18 to 20), which is configured to bend (deform) the oblong element ES (crosswise) so as to change a length (of the extension) of the oblong element ES in the given direction D (in particular, along the intermediate segment IS'). In other words, the deflector device DD is configured to bend (deform) the oblong element ES (crosswise) so as to change a length of the part of the oblong element ES that extends in the given direction D (in particular, along the intermediate segment IS').

It should be pointed out that the combination of the movement of the end E (together with the input 9 or the output 10) with the activity of the device DD allows the length of the intermediate segment IS' to be effectively changed.

Tests have surprisingly shown that, in this way (thanks to the presence of the oblong element ES supporting the transporting element 11 - from behind - in combination with the other features), the articles 2 are less likely to create clogging. This is assumed to be due to the fact that the transporting element 11 is held more in position thanks to the presence/action of the oblong element ES and that, therefore, there is a smaller chance of creating a space for unwanted movements of the articles 2.

The oblong element ES is an element having an oblong shape, namely with a longitudinal extension greater than its transverse extension. In particular, the longitudinal extension is at least twice the transverse extension.

According to some non-limiting embodiments, the transfer conveyor assembly 8 is configured to convey the articles 2 along the intermediate segment IS' (at least partially) upwards. In this context, the problem of clogging is particularly acute and difficult to solve.

Surprisingly, even in this context, the combination of the features indicated above has made it possible to significantly reduce wrong orientations of the articles.

In particular, the deflector device DD is configured to bend (deform) the oblong element (crosswise) so as to move an end segment of the oblong element ES, opposite the end E, away (and/or closer) from (and/or to) the intermediate segment IS'.

More precisely, though not necessarily, in use, when the moving assembly 12 moves the input 9 (and/or the output 10) so as to reduce the length of the intermediate segment IS, the end segment of the oblong element ES is moved away from the intermediate segment IS'. In addition or alternatively, in use, when the moving assembly 12 moves the input 9 (and/or the output 10) so as to increase the length of the intermediate segment IS, the end segment of the oblong element ES is moved closer to the intermediate segment IS'.

In particular, the deflector device DD is configured to bend (deform) the oblong element ES (crosswise) so that (at least) the end segment does not extend in the given direction D (in particular, so as to also change, as a consequence, a length of the part of the oblong element ES that extends in the given direction D).

Alternatively or in addition, the deflector device DD is configured to bend (deform) the oblong element ES (crosswise) so that (at least) the end segment extends in one or more directions different from the given direction D (in particular, so as to also change, as a consequence, a length of the part of the oblong element ES that extends in the given direction D).

According to some non-limiting embodiments, the moving assembly 12 is configured to move the end E towards and away from the deflector device DD (in particular, by moving the end E in the given direction D). In other words, the moving assembly 12 is configured to move the input 9 (and/or the output 10) towards and away from the deflector device DD (in particular, by moving the end E in the given direction D).

Advantageously, though not necessarily, the deflector device DD comprises (in particular, is) a winder, which is configured to wind the end segment of the oblong element ES (when the length of the intermediate segment IS' is reduced) and to unwind the end segment of the oblong element ES (when the length of the intermediate segment IS' is increased).

In this way, in addition to being less likely to create clogging (as discussed above), the transfer conveyor assembly 8 has a particularly compact, simple, efficient and reliable structure. Among other things, it should be pointed out that, when the end segment of the oblong element ES is wound, it can create less interferences with other parts of the machine and can be contained in a specific and limited space.

According to some non-limiting embodiments, the winder comprises a winding roller WR, around which the end segment of the oblong element is wound in use, and an actuator (for example, a spring or an electric motor - of a known type and not shown) for rotating the winding roller WR around an axis of its own.

Advantageously, though not necessarily, the transfer conveyor assembly 8 comprises at least a further wall W', which is configured to support the transporting element 11 from behind (namely, on the side of the rear face thereof) and has at least a further oblong element ES' having a further end E' connected to the output 10 in a substantially integral manner. In these cases, the moving assembly 12 comprises a further deflector device DD', which is configured to bend the further oblong element ES' so that an end segment of the oblong element ES' does not extend in the given direction D and, in particular, to change, as a consequence, a length of the oblong element ES' in the given direction D. Furthermore (in these cases, again), the first end E is connected to the input 9 in a substantially integral manner; and the oblong element ES and the further oblong element ES' are arranged in succession along the intermediate segment IS'.

In this way, the intermediate segment IS' can change its extension from both ends thereof and, hence, can better adapt to different geometries of the store 1.

The oblong element ES' is an element having an oblong shape, namely with a longitudinal extension greater than its transverse extension. In particular, the longitudinal extension is at least twice the transverse extension.

In particular, the deflector device DD' is configured to bend (deform) the further oblong element ES' (crosswise) so as to move the end segment of the oblong element ES', opposite the end E', away and/or closer from/to the intermediate segment IS'.

Advantageously, though not necessarily, the deflector device DD' comprises (in particular, is) a further winder, which is configured to wind the end segment of the further oblong element ES' (when the length of the intermediate segment IS' is reduced) and to unwind the end segment of the oblong element ES' (when the length of the intermediate segment IS' is increased).

In this way, in addition to being less likely to create clogging (as discussed above), the transfer conveyor assembly 8 has a particularly compact, simple, efficient and reliable structure. Among other things, it should be pointed out that, when the end segments of the oblong elements ES and ES' are wound, they can be contained in specific and limited spaces.

According to some non-limiting embodiments, the further winder (of the deflector DD') comprises a winding roller WR', around which the end segment of the oblong element is wound in use, and an actuator (for example, a spring or an electric motor - of a known type and not shown) for rotating the winding roller WR' around an axis of its own.

In particular, the winding rollers WR and WR' are arranged next to one another. In addition or alternatively, the axes of the winding rollers WR and WR' are parallel to one another.

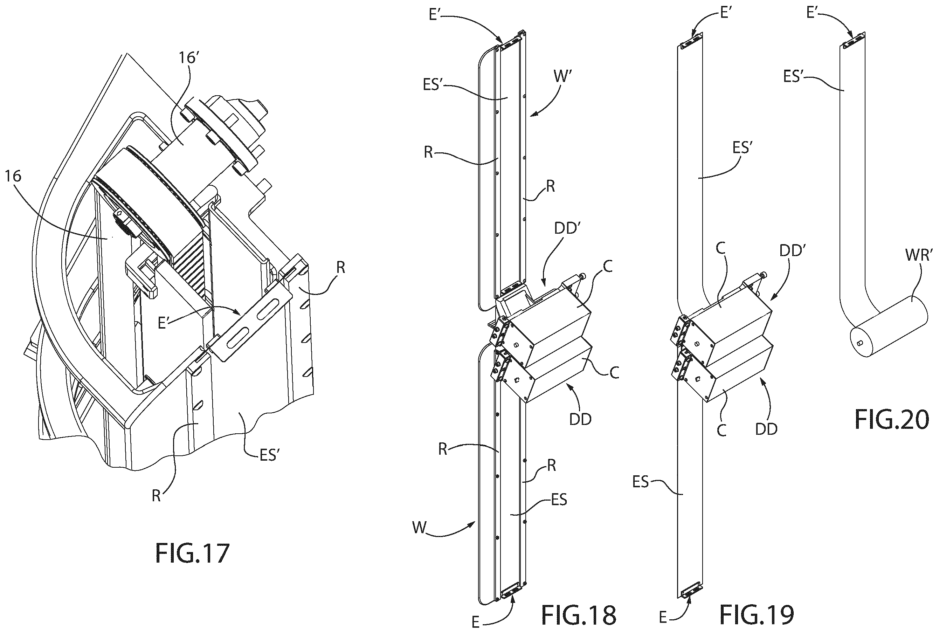

According to some non-limiting embodiments, the transfer conveyor assembly 8 comprises two cases C, inside each of which a respective winding roller WR and WR' is mounted. In particular, figure 19 shows the cases C from which the oblong elements ES and ES' come out, whereas figure 20 shows the winding roller WR' from which the oblong element ES' extends (the case C was removed for greater clarity).

Advantageously, though not necessarily, the oblong element ES comprises (in particular, is) a metal band, in particular made of steel (more in particular, stainless steel). In addition or alternatively, the further oblong element ES' comprises (in particular, is) a metal band, in particular made of steel (more in particular, stainless steel).

Tests have shown that these materials ensure sufficient ease of handling and durability in the specific use.

Alternatively or in addition, the oblong element ES (and/or the further oblong element) comprises (in particular, is) a roller shutter. The roller shutter comprises a plurality of slats arranged parallel and in succession and hinged to one another.

According to some non-limiting embodiments, the oblong element ES has a thickness ranging from about 0.1 mm (in particular, from about 0.2 mm; more in particular, from about 0.25 mm) to about 0.5 mm (in particular, to about 0.4; more in particular, to about 0.35 mm). In addition or alternatively, the further oblong element ES' has a thickness ranging from about 0.1 mm (in particular, from about 0.2 mm; more in particular, from about 0.25 mm) to about 0.5 mm (in particular, to about 0.4; more in particular, to about 0.35 mm).

Surprisingly, these measures make it possible to ensure an adequate support to the transporting element 11 and, at the same time, the possibility for it to deform (wind) in an adequate manner.

In particular, the oblong element ES is made of steel (more in particular, stainless steel). In addition or alternatively, the further oblong element ES' is made of steel (more in particular, stainless steel).

Advantageously, though not necessarily, the oblong element ES has a modulus of elasticity (Young's modulus) of at least about 170 GPa; in particular, the oblong element ES is made of a C72 UNI 10270-1 and/or 52SiCrNi5 UNI 10270-2 spring steel and/or of an ASTM-A36 steel and/or of an AISI 301 steel and/or the like. In addition or alternatively, the further oblong element ES' has a modulus of elasticity (Young's modulus) of at least about 170 GPa; in particular, the further oblong element ES' is made of a C72 UNI 10270-1 and/or 52SiCrNi5 UNI 10270-2 spring steel and/or of an ASTM-A36 steel and/or of an AISI 301 steel and/or the like.

According to specific, though non-limiting embodiments, the oblong element ES (and the oblong element ES') is (are) made of AISI 301 steel.

Advantageously, though not necessarily, the transfer conveyor assembly 8 comprises two guides R (see, in particular, figures 18, 16 and 17), which extend in the given direction D along at least part of the intermediate segment IS' and are configured to each accommodate and have a (longitudinal) side edge of the oblong element ES slide within them. In particular, each guide has a sliding channel, which is configured to house and have a side edge of the oblong element ES slide within it. More in particular, the guide has a width ranging from about 0.3 mm (in particular, from about 0.4 mm; more in particular, from about 0.45 mm) to about 1 mm (in particular, to about 0.9 mm; more in particular, to about 0.8 mm; even more in particular, to about 0.75 mm).

Tests have shown that, in this way, the oblong element ES is surprisingly held in place. The guides R (in particular, made of stainless steel) also make it possible to correctly handle the movement (unwinding/winding) of the oblong element ES in the given direction D.

In addition or alternatively, the transfer conveyor assembly 8 comprises two guides R, which extend in the given direction D along at least part of the intermediate segment IS' and are configured to each accommodate and have a (longitudinal) side edge of the further oblong element ES' slide within them. In particular, each guide R has a sliding channel, which is configured to house and have a side edge of the oblong element ES' slide within it.

Tests have shown that, in this way, the oblong element ES is surprisingly held in place. The guides R also make it possible to correctly handle the movement (unwinding/winding) of the oblong element ES' in the given direction D.

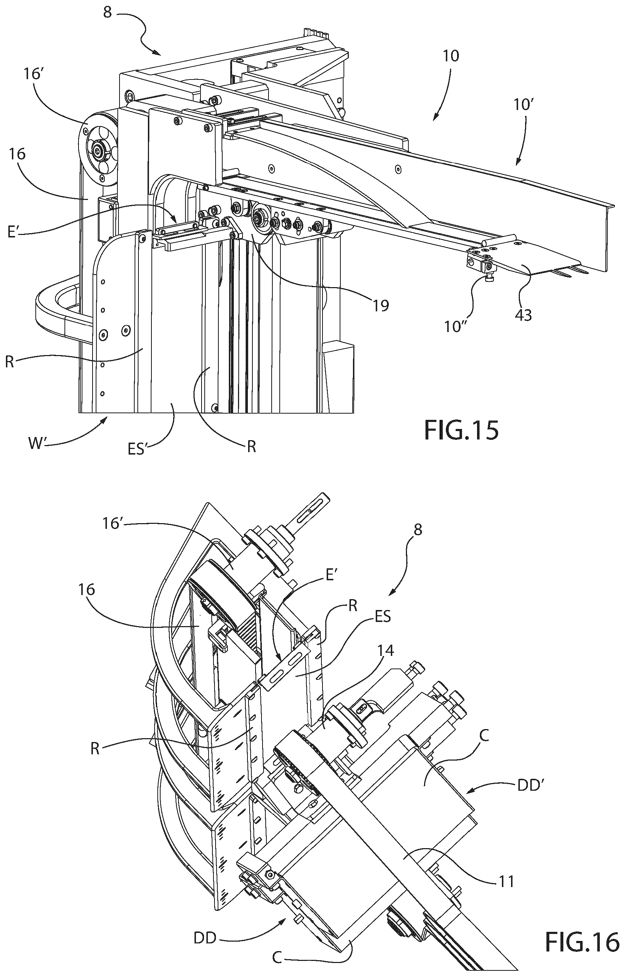

In order to better understand the structure of the transfer conveyor 8, of the oblong plates ES and ES' and of the guides R, particular reference can be made to figures 15-20. Figure 18 shows the oblong plates ES and ES' with their side edges housed in the respective guides R, whereas in figure 19 the guides R were removed.

Although figures 15-17 show the (sole) upper part of the transfer conveyor 8 (and, hence, the oblong element ES'), what is shown also applies to the lower part of the transfer conveyor 8 (and, therefore, also to the oblong element ES). The two parts are similar (but, of course, with different orientations).

According to some non-limiting embodiments, the conveyor assembly 3 comprises a conveyor 6 for conveying the articles 2 from the input station 4 along a segment S1 of the path P. The transfer conveyor assembly 8 is configured to convey the articles 2 from the conveyor 6 along the transfer segment IS (in particular, with substantially linear portions) of the path P and has the input 9, arranged in the area of the segment S1 to receive the articles 2 from the conveyor 6.

Advantageously, though not necessarily, the conveyor assembly 3 also comprises a conveyor 7 for conveying the articles 2 to the output station 5 along a segment S2 of the path P. In these cases, the transfer conveyor assembly 8 is configured to convey the articles 2 from the conveyor 6 to the conveyor 7 along the transfer segment IS (in particular, the substantially linear transfer segment) of the path P and has the input 10, arranged in the area of the segment S2 to feed the articles to the conveyor 7.

In particular, the conveyors 6 and 7 (and, in some cases, also the transfer conveyor assembly 8) are endless conveyors.

According to some non-limiting embodiments, the transfer conveyor assembly 8 is arranged between the conveyors 6 and 7.

Advantageously, though not necessarily, the transfer conveyor assembly 8 is arranged on the side of the conveyors 6 and 7.

Advantageously, though not necessarily, the transfer conveyor assembly 8 is configured to convey the articles 2 upwards.

In particular, the segment S1 (which, in particular, has a substantially helical shape) extends from the input station 4 to the input 9. The segment S2 (which, in particular, has a substantially helical shape) extends from the output 10 to the output station 5.

According to some non-limiting embodiments, the moving assembly 12 is configured to move the transfer conveyor assembly 8 so as to move the input 9 and the output 10 along the conveyor 6 and the conveyor 7, respectively. In particular, the moving assembly 12 also is (consequently) configured to change the length (of the transfer segment IS and) of the segments S1 and S2.

By lengthening the segments S1 and S2, the length of the path P (and, hence, the capacity of the store 1) increases; by shortening the segments S1 and S2, the length of the path P (and, hence, the capacity of the store 1) decreases.

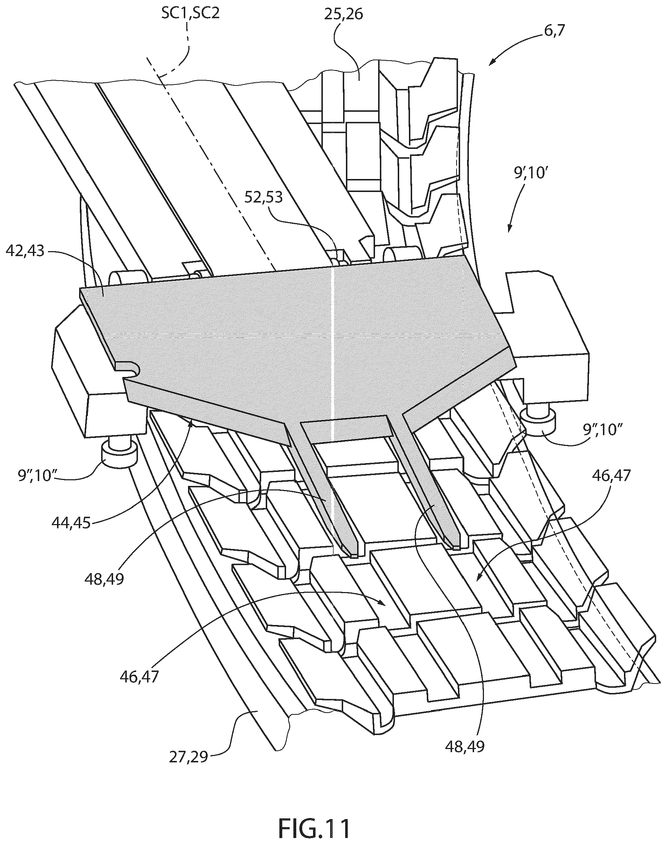

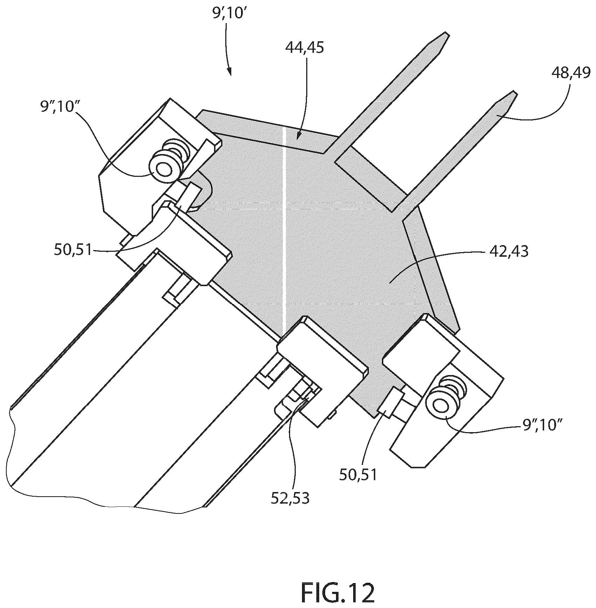

According to some non-limiting embodiments (e.g. as shown in figures 11 and 12), the conveyor assembly 3 comprises a joining device 9', which is configured to allow the articles 2 to shift from the conveyor 6 to the transfer conveyor assembly 8 and is movable on the conveyor 6. In some cases, the conveyor assembly 3 also comprises a joining device 10', which is configured to allow the articles 2 to shift from the transfer conveyor assembly 8 to the conveyor 7 and is movable on the conveyor 7.

In particular, the joining device 9' comprises at least two centring elements 9", which are arranged on opposite sides of the conveyor 6 to reduce the lateral movement of the joining device 9' relative to the conveyor 6.

In particular, the joining device 10' comprises at least two centring elements 10", which are arranged on opposite sides of the conveyor 7 to reduce the lateral movement of the joining device 10' relative to the conveyor 7.

Each centring element 9" comprises at least a first roller (in particular, at least a roller bearing) and/or each centring element 10" comprises at least a second roller (in particular, at least a roller bearing).

Tests have shown that, in this way, it is possible to obtain more stable and reliable connections of the transfer conveyor assembly 8 to the conveyors 6 and/or 7 (a more precise relative position) and a reduction in clogging events.

Advantageously, though not necessarily, the conveying assembly 3 comprises both the joining device 9' and the joining device 10'.

According to some preferred, though non-limiting embodiments, the joining devices 9' and 10' are substantially identical. To this regard, it should be pointed out that figures 11 and 12 show both the joining device 9' and the joining device 10'.

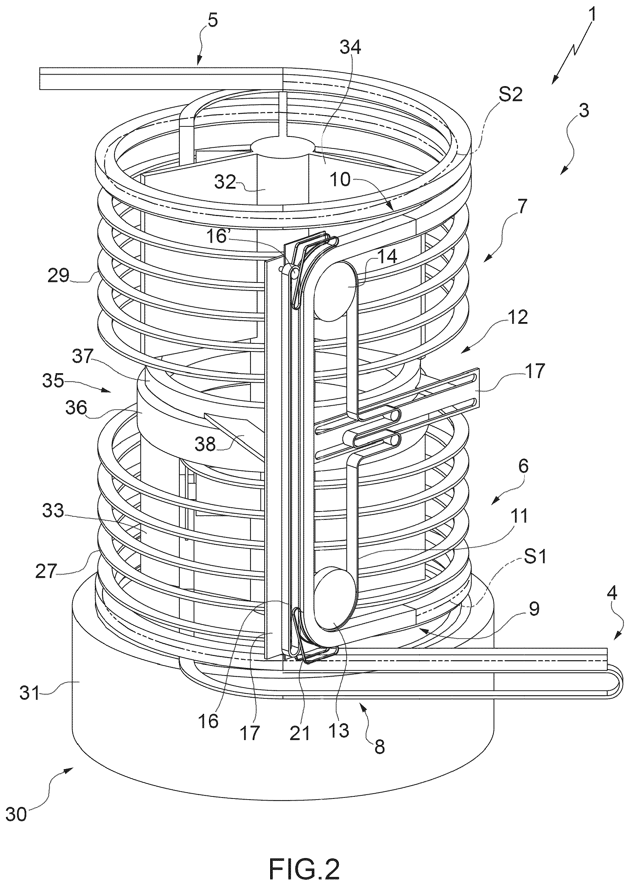

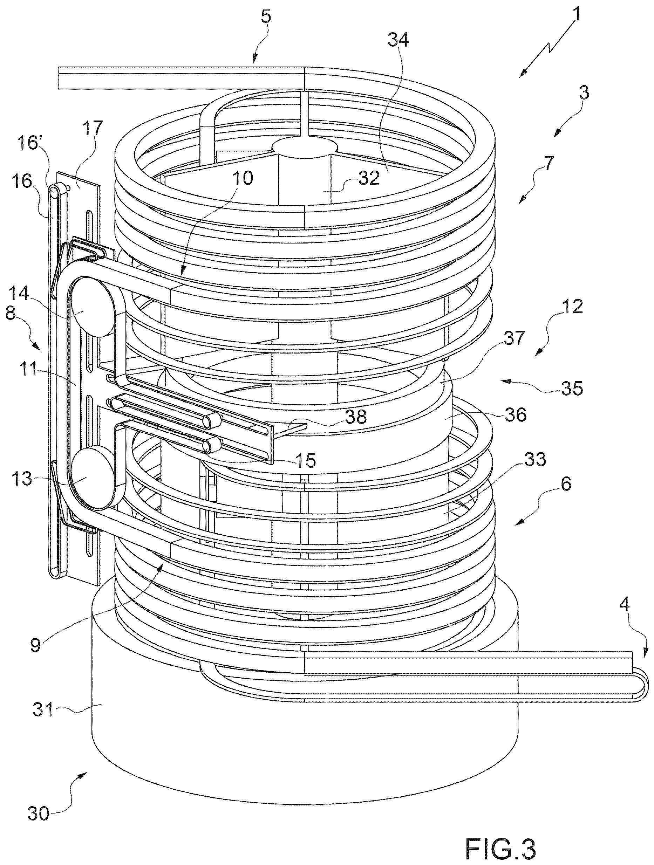

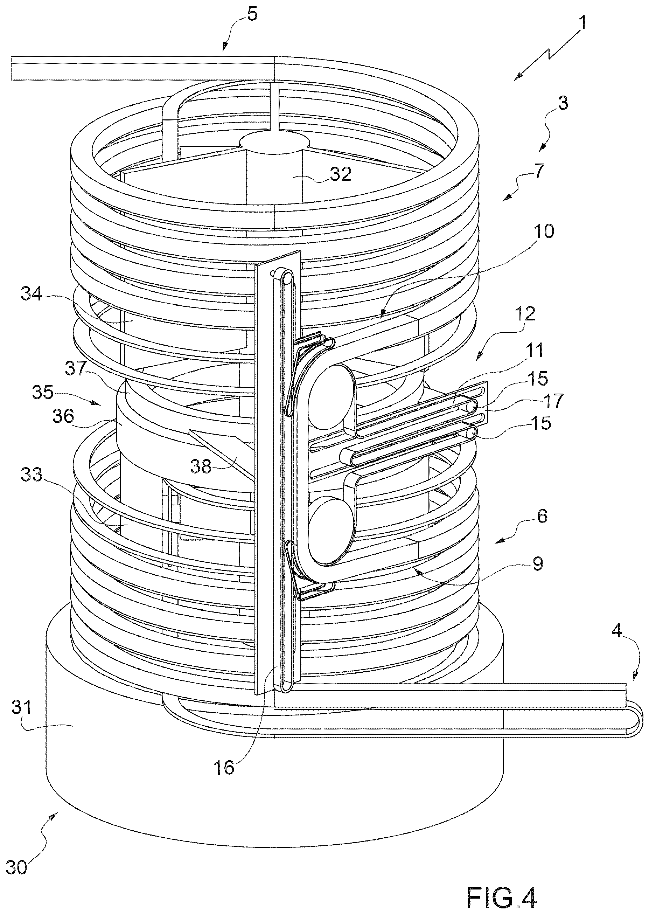

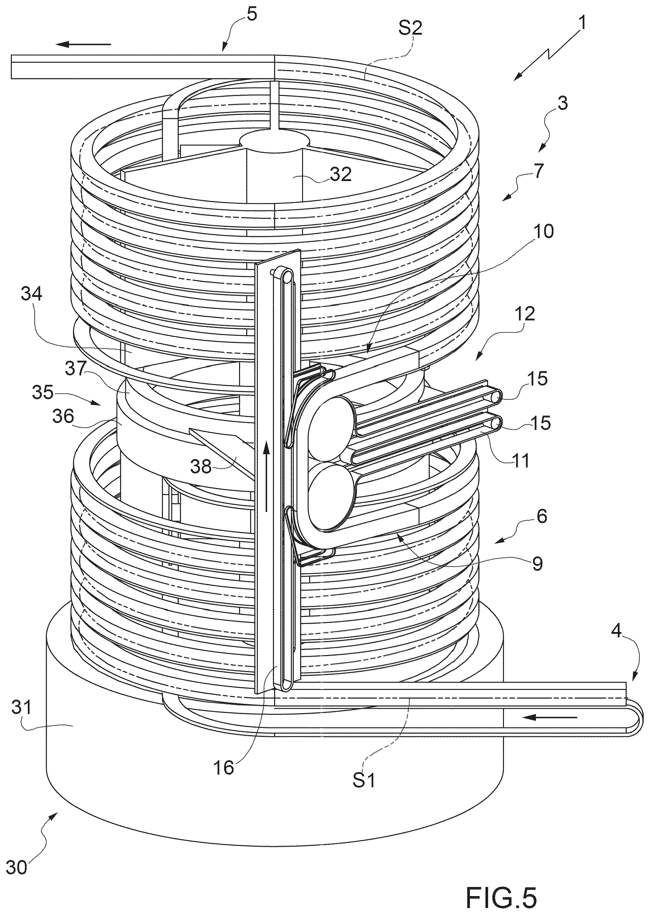

In particular, the moving assembly 12 (figures 1-5) is configured to move the transfer conveyor assembly 8 so as to move the joining device 9' and/or the joining device 10' along the conveyors 6 and 7, respectively.

In particular, said intermediate segment IS' extends upwards, more in particular is substantially vertical.

Advantageously, though not necessarily, the intermediate segment IS' is substantially linear.

According to some non-limiting embodiments, the transporting element 11 comprises (is) an oblong element closed on itself. In particular, the transporting element 11 comprises (is) a belt and/or a chain.

Thanks to the presence of the transporting element 11, the risks of clogging of articles 2 along the transfer segment IS and of damaging the articles 2 while, in use, they are conveyed along the transfer segment IS are reduced. Thanks to the transporting element 11, it is also possible to feed the articles 2 from the conveyor 6 arranged at the bottom to the conveyor 7 arranged at the top.

Advantageously, though not necessarily, the transporting element 11 is configured to (at least partially) move the articles 2, moving (together with the articles) along the transfer segment IS.

In particular, the transfer segment IS extends between the input 9 and the output 10 (more in particular, from the input 9 to the output 10).

The input 9 and the output 10 are movable along the conveyor 6 and the conveyor 7, respectively.

In particular, each conveyor 6 and 7 has at least a respective turn (e.g. a helix and/or a loop). Advantageously, though not necessarily, each conveyor 6 and 7 has a plurality of respective turns (loops). In other words, each conveyor 6 and 7 is wound on itself so as to have a plurality of turns (loops). More in particular, the winding direction of the conveyor 6 is contrary to the winding direction of the conveyor 7. For example, if (looking from above) the winding direction of the conveyor 7 is clockwise, the winding direction (always looking from above) of the conveyor 6 is counterclockwise.

Advantageously, though not necessarily, the conveyor 6 has a plurality of first turn (loops) and the second conveyor 7 has a plurality of second turns (loops) having the same radius and the same distance as the first turns.

According to specific non-limiting embodiments, the conveyor 6 has a plurality of turns with a constant radius and distance; the conveyor 7 has a plurality of turns with a constant radius and distance. More precisely, the conveyor 6 has at least a segment with a (cylindrical) helical shape with a constant radius and distance; the conveyor 7 has at least a segment with a (cylindrical) helical shape with a constant radius and distance.

According to alternative embodiments which are not shown herein, each turn comprises two curved end portions and two linear central portions. In these cases, for example, the turns extend around two drums having parallel axes (see, for example, figure 1 of EP738478 of the Applicant).

Advantageously, though not necessarily, the transfer conveyor assembly 8 comprises a pulley 13 (or, alternatively, a suitably shaped - for example, "U"-shaped - sliding plane or a combination of the pulley 13 and of the sliding plane) and a pulley 14, around which the transporting element 11 is partially wound.

In particular, the store 1 (more precisely, the transfer conveyor assembly 8) comprises at least an operating assembly (of a known type and not shown) for rotating at least one of the pulleys 13 and 14. More in particular, it should be pointed out that the transfer conveyor assembly 8 is structured in such a way that the output 10 is arranged approximately in the area (more precisely, at the height) of the pulley 14 and the input 9 is arranged in the area (more precisely, at the height) of the pulley 13 (or of the sliding plane alternative to the pulley 13).

According to some non-limiting embodiments, the aforementioned operating assembly comprises (is) a motor and/or a kinematic mechanism connected to other parts of the store 1.

Advantageously, though not necessarily, the store 1 (in particular, the transfer conveyor assembly 8; more in particular, the moving assembly 12) comprises an actuator assembly (of a known type and not shown) for moving the joining devices 9' and 10' (and the pulleys 13 and 14) closer to and away from one another, in particular in a direction of longitudinal extension (of the intermediate portion) of the transfer segment IS (more in particular, in a substantially vertical direction).

According to some non-limiting embodiments, the aforementioned actuator assembly comprises (is) a motor (e.g. an electric motor) and/or a kinematic mechanism connected to other parts of the store 1.

In particular, the aforementioned actuator assembly is configured to change the distance between the joining devices 9' and 10' (and between the pulleys 13 and 14) as a function of (proportionally to) the difference between the speeds at which the conveyor 6 and the conveyor 7 convey the articles 2. More in particular, the actuator assembly is configured to change the distance between the joining devices 9' and 10' (and between the pulleys 13 and 14) with a speed that is proportional to the difference between the speeds at which the conveyor 6 and the conveyor 7 convey the articles 2.

According to some non-limiting embodiments, the transporting element 11 comprises an active segment AT with a variable length, which extends along (the intermediate segment IS' of) the transfer segment IS between the input 9 and the output 10 (in particular, between the joining devices 9' and 10'; in particular, between the pulleys 13 and 14), and a passive segment PT arranged on the opposite side of the of the oblong element ES (and of the pulleys 13 and 14) relative to the active segment AT (in other words, so that the oblong element ES is arranged - and the pulleys 13 and 14 are arranged - between the active segment AT and the passive segment PT).

In particular, the passive segment PT arranged on the opposite side of the further oblong element ES' (and of the pulleys 13 and 14) relative to the active segment AT (in other words, so that the oblong element ES' is arranged - and the pulleys 13 and 14 are arranged - between the active segment AT and the passive segment PT).

Advantageously, though not necessarily, the passive segment PT extends between the pulleys 13 and 14 and partially around at least a further pulley 15 of the transfer conveyor assembly 8, which also includes a further actuator assembly (also known and not shown) for moving the pulley 15 (away from and towards the transfer segment IS).

Note that, advantageously, the relative movement between the pulleys 13 and 14 and the movement of the pulley 15 are connected to one another so that one compensates for the other (and the transporting element 11 always remains correctly stretched). In other words, when the active segment AT gets shorter by a given length, the passive segment PT gets longer by the given length and vice versa (compensating for one another).

In some non-limiting cases, the further actuator assembly comprises a kinematic mechanism, which transfers, according to a defined proportional ratio (for example 1 to 1), the relative movement (more precisely, the displacement) of the pulleys 13 and 14 to the pulley 15.

Alternatively, the further actuator assembly comprises (is) a motor (e.g. an electric motor). In these cases, the operation of the actuator assembly (for moving the joining devices 9' and 10' - and the pulleys 13 and 14) and of the further actuator assembly (for moving the pulley) is coordinated by a control unit.

In particular, the transfer conveyor assembly 8 comprises at least a pulley 15 and at least two fixed pulleys (known and not shown - typically, arranged one above the other). More precisely, though not necessarily, the pulley 15 is arranged (at an intermediate height) between the two fixed pulleys and is (horizontally) movable towards and away from the fixed pulleys. The relative movement between the pulley 15 on the one hand and the fixed pulleys on the other hand compensates for the relative movement between the pulleys 13 and 14 (by lengthening the passive segment PT when the active segment AT is shortened and vice versa).

According to some specific and non-limiting embodiments (like the one shown herein), the transfer conveyor assembly 8 comprises at least two pulleys 15 and at least three fixed pulleys (known and not shown). In these cases, the relative movement between the pulleys 15 on the one hand and the fixed pulleys on the other hand compensates for the relative movement between the pulleys 13 and 14 (by lengthening the passive segment PT when the active segment AT shortens and vice versa).

Advantageously, though not necessarily, the transfer conveyor assembly 8 comprises at least a further advancing device 16, which faces the transporting element 11 and is configured to move along the intermediate segment IS '(in particular, in coordination with the transporting element 11; more precisely, at the same speed as the transporting element 11). In particular, the transporting element 11 and the advancing device 16 are designed to clamp the articles 2 between them and to at least partially accompany them (move them) along the transfer segment IS.

More precisely, the advancing device 16 comprises (is) a belt and/or a chain.

Advantageously, though not necessarily, the transfer conveyor assembly 8 comprises a motor (electric motor - of a known type and not shown) to operate (rotate) one of the pulleys 16' and a different motor (electric motor - of a known type and not shown) to operate (rotate) one of the pulleys 14 and 13 (in particular, the pulley 14). In particular, the store 1 (more precisely, the transfer conveyor assembly 8) comprises a control unit configured to operate the two electric motors in a coordinated manner so that the speeds of the transporting element 11 and of the advancing device 16 are identical to one another (even when the pulleys 13 and 14 move away from or towards one another). For example, in use, when the pulleys 13 and 14 move away and the rotation speed of the pulleys 16' is kept constant (so as not to vary the speed of movement of the articles 1 along the transfer segment IS), the rotation speed of the pulley 14 is decreased.

According to some alternative and non-limiting embodiments, the advancing device 16 is wound around a pair of pulleys 16' (one of them being shown in figures 1-6 and the other one being shown in figure 13). In particular, one of the pulleys 16' is connected, by means of a kinematic mechanism (known and not shown), to at least one of the pulleys 14 and 13, said kinematic mechanism (connected to a motor) being configured to transfer the rotary motion from the pulleys 13 and 14 to the pulley 16' so that the speeds of the transporting element 11 and of the advancing device 16 are identical to one other.

Thanks to the advancing device 16, the risks of clogging of articles 2 along the transfer segment IS and of damaging the articles 2 while, in use, they are conveyed along the transfer segment IS are further reduced. Thanks to the advancing device 16, it is also possible improve the feeding of the articles 2 from the conveyor 6 arranged at the bottom to the conveyor 7 arranged at the top.

According to some non-limiting embodiments, the transfer conveyor assembly 8 comprises a plate 17, on which the aforementioned pulleys (the pulleys 16' and the fixed pulleys) are mounted. In particular, the plate 17 has slits 18, which act as a guide for the pulleys 13 and 14. In other words, in use, the pulleys 13 and 14 each slide along a respective slit 18.

Alternatively or in addition, the transfer conveyor assembly 8 comprises two flat supports 19, on which the pulleys 13 and 14, respectively, are mounted (in a rotary manner). More precisely, the aforementioned actuator assembly (not shown) is configured to move the flat supports 19.

In some cases, the flat supports 19 can slide along the slits 18 or are movable along linear guides. The movement of the flat supports 19 can be obtained, for example, by means of linear actuators and/or kinematic mechanisms connected to other parts of the store 1.

In addition or alternatively, the plate 17 has slits 20, which act as a guide for the pulley/s 15. In other words, in use, the pulley/s 15 slide/s along a respective slit 20.

Alternatively or in addition, the pulleys 15 are mounted on a slider that is movable along a linear guide. The movement of this slider can be obtained, for example, by means of linear actuators and/or kinematic mechanisms connected to other parts of the store 1.

Advantageously, though not necessarily, the joining device 9' and the joining device 10' move in the direction of the longitudinal extension of the transfer segment IS in an integral manner to a respective pulley 13 and 14.

In some non-limiting embodiments, like the one shown in figure 15, the ends E and E' are connected (in an integral manner) to the input 9 (in particular, to the joining device 9') and to the output 10 (in particular, to the joining device 10') by means of the respective flat supports 19. More precisely, the ends E and E' are integrally connected to the flat supports 19, which, in turn, are mounted on the joining device 9' and on the joining device 10', respectively.

According to some non-limiting embodiments, the transfer conveyor assembly 8 further comprises a deflector belt 21 arranged in the area of the pulley 13 for directing (modifying their advancing direction) the articles 2, coming from the input 9, in the transfer segment IS. In addition or alternatively, the transfer conveyor assembly 8 further comprises a deflector belt 22 arranged in the area of the pulley 14 for directing (modifying their advancing direction) the articles 2, coming from the transfer segment IS, towards the output 10.

In particular, the deflector belts 21 and 22 are movable relative to one another, in a integral manner to the pulleys 13 and 14, respectively. According to some non-limiting embodiments, the deflector belts 21 and 22 are each mounted on a respective flat support 19.

Advantageously, though not necessarily, the conveyors 6 and 7 are arranged in such a way that one is (at least partially) above the other. In particular, the conveyor 7 is (at least partially) arranged above the conveyor 6 (and the output station 5 is arranged higher than the input station 4). By so doing, it is possible to have the output 10 in a relatively high position relative to the input 9.

In some non-limiting cases, the output station 5 is arranged higher (than the input 9) and than the input station 4. In particular, the output station 5 is arranged higher than the output 10, which, in turn, is arranged higher than the input 9, which is arranged higher than the input station 4.

More precisely (the conveyors 6 and 7 are arranged so that), the segments S1 and S2 are substantially coaxial to one another.

According to some non-limiting embodiments, the aforementioned intermediate segment IS' is (linear and) substantially parallel to an axis A around which the segment S1 and the segment S2 are wound.

In accordance with specific non-limiting embodiments, the transfer segment IS also has two connection portions SC1 and SC2 (which are partially transverse - in particular, perpendicular - to the intermediate segment IS'), which extend between the intermediate segment IS' and the segments S1 and S2, respectively. The transfer conveyor assembly 8 is configured to also convey the articles 2 along the connection portions SC1 and SC2.

More precisely, though not necessarily, the connecting portions SC1 and SC2 extend substantially horizontally.

According to some non-limiting embodiments, the transfer conveyor assembly 8 comprises conveyors with (substantially horizontal) movable transporting elements in the area of the connection portions SC1 and SC2.

According to some non-limiting embodiments, the transfer segment IS has two curved joining portions, which connect the intermediate segment IS' to the portions SC1 and SC2.

Advantageously, though not necessarily, the moving assembly 12 is configured to rotate the transfer conveyor assembly 8 around the axis A.

In use, while the moving assembly 12 rotates the transfer conveyor assembly 8 around the axis A, the input 9 (more precisely, the joining device 9') moves (slides) along the conveyor 6 and the output 10 (more precisely, the joining device 10') moves (slides) along the conveyor 7. In order to have the input 9 follow the conveyor 6 and the output 10 follow the conveyor 7, the distance between the pulleys 13 and 14 is caused to change.

Figures 1 to 5 show the store 1 in successive operating phases while the store 1 is filled. These figures show the information disclosed above, namely that the rotation movement is also associated with a variation in the length of the transfer segment IS, in particular of the intermediate segment IS '(in other words, a variation in the distance between the joining devices 9' and 10' - and between the pulleys 13 and 14).

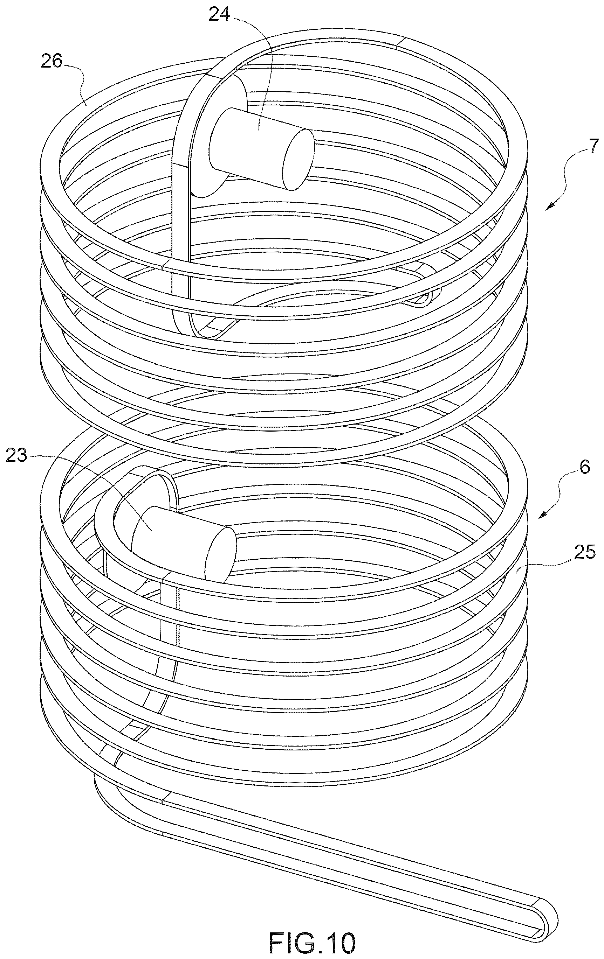

As better shown in figure 10, the conveyor 6 comprises at least a motorised pulley 23 and the conveyor 7 comprises at least a motorised pulley 24. The pulleys 23 and 24 are designed to allow a transporting element 25 and a transporting element 26, respectively, to move along the segment S1 and S2, respectively, (and along relative return segments). The segments S1 and the respective return segment define, together, a path closed on itself (typical of an endless conveyor). The segments S2 and the respective return segment define, together, a path closed on itself (typical of an endless conveyor).

The transporting element 25 is, according to some non-limiting embodiments, a belt and/or a chain. Advantageously, though not necessarily, the transporting element 25 is a chain. More precisely, the transporting element 25 is a chain as disclosed, for example, in US6364094 and/or WO2013141807.

The transporting element 26 is, according to some non-limiting embodiments, a belt and/or a chain. Advantageously, though not necessarily, the transporting element 26 is a chain. More precisely, the transporting element 26 is a chain as disclosed, for example, in US6364094 and/or WO2013141807.

The transporting elements 25 and 26 allow the articles 2 to be handled delicately.

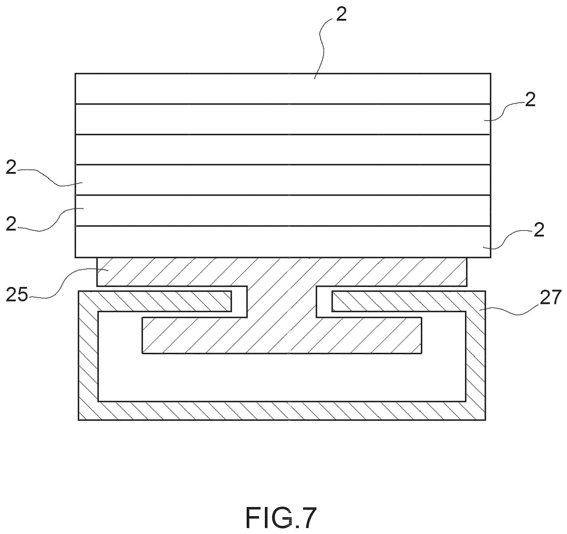

Advantageously, though not necessarily, the conveyor 6 comprises (figure 7) a guide (a track) 27.

In particular, the transporting element 25 is configured to slide on the guide 27.

According to some non-limiting embodiments, the guide 27 is provided with an indent 28, inside which a (lower) protuberance of the transporting element 25 extends. Thanks to this structure, the element 25 follows the guide 27 and moves along the segment S1. To this regard, it should be pointed out that the guide 27 extends along the path S1; more precisely, the guide 27 has the shape of the path S1 (and defines the path S1).

In addition or alternatively, the conveyor 7 comprises a guide (track) 29.

In particular, the transporting element 26 is configured to slide on the guide 29.

According to some non-limiting embodiments, the guide 29 has a structure and function similar to the guide 27. The guide 29 extends along the path S2; more precisely, the guide 29 has the shape of the path S2 (and defines the path S1).

Advantageously, though not necessarily, the first centring elements 9" (in particular, figures 11 and 12) are arranged on opposite sides of the guide 27 and substantially in contact with the guide 27.

In addition or alternatively, the centring elements 10" are arranged on opposite sides of the guide (29) and substantially in contact with the guide 29.

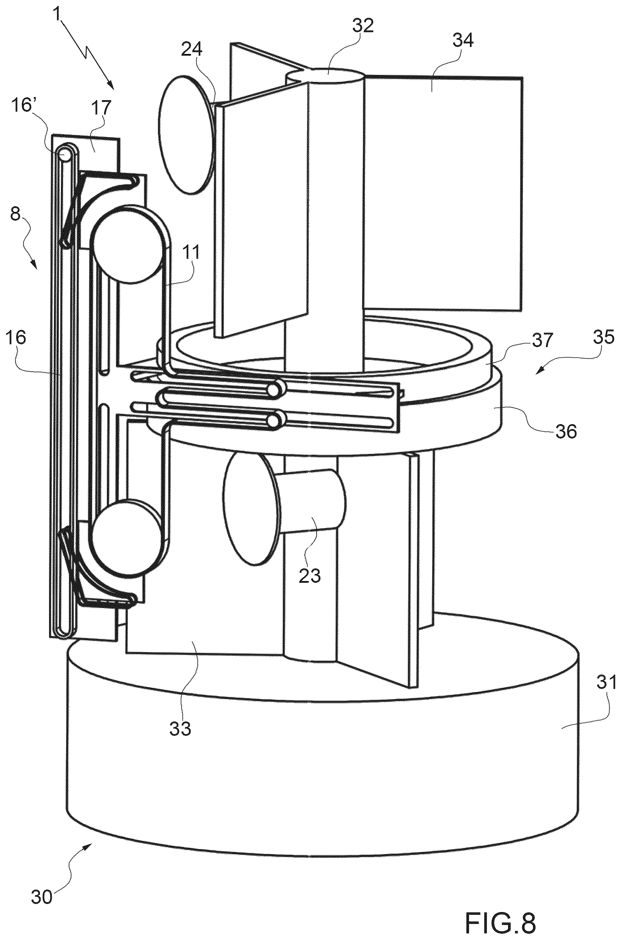

With particular reference to figure 8, according to some non-limiting embodiments, the store 1 also comprises a main support structure 30 carrying the conveyors 6 and 7 (more precisely, the guides 27 and 29) and the transfer conveyor assembly 8.

According to some non-limiting embodiments, the main support structure 30 comprises a base 31 and a support column 32 (perpendicularly) projecting from the base 31. In particular, the column 32 extends parallel to the axis A; more in particular, the column 32 extends along the axis A (in other words, the axis A - also - is the longitudinal axis of the column 32). More precisely, the column 31 has a vertical orientation.

According to some non-limiting embodiments, the main support structure 30 also comprises a support assembly 33 fixed on the column 32 and carrying the conveyor 6 (more precisely, the guide 27) and a support assembly 34 fixed on the column 32, spaced apart from the support assembly 33 and carrying the conveyor 7 (more precisely, the guide 29).

Furthermore, in some cases (like the one shown herein), the main support structure 30 also comprises a bearing 35, which, in particular, is interposed between the support assembly 33 and the support assembly 34 and is carried by the support assembly 33. The bearing 35 is part of the moving assembly 12. More precisely, the bearing 35 comprises a fixed portion 36 mounted on the support assembly 33 and a movable portion 37 configured to rotate around the axis A and carrying the transfer conveyor assembly 8. More in detail, the transfer conveyor assembly 8 is mounted so as to be integral to the bearing 35 (more precisely, to the movable portion 34) by means of two arms 38.

According to some non-limiting embodiments, the moving assembly 12 comprises at least a motor (of a known type and not shown) configured to move the transfer conveyor assembly 8 (more precisely, to rotate the transfer conveyor assembly 8 around the axis A). In these cases, in particular, the store 1 comprises sensors (encoders - of a known type and not shown) to detect the difference in speed between the conveyors 6 and 7 (more precisely, between the motorised pulleys 24 and 25) and a control unit to operate the moving assembly 12 as a function of this difference.

Advantageously, though not necessarily, the aforementioned actuator assembly (for moving the joining devices 9' and 10' - and the pulleys 13 and 14 towards and away from one another) comprises a kinematic mechanism (for example, a gear system with a worm screw) connected to the motor of the moving assembly 12 to transmit the motion (according to a particular proportion) to the joining devices 9' and 10' - and to the pulleys 13 and 14 (in order to have them move towards and away from one another).

Advantageously, though not necessarily, the transfer conveyor assembly 8 is configured to change the speed at which the length of the transfer segment IS changes as a function of the rotation speed generated by the moving assembly 12 around the rotation axis (to this regard, see, for example, WO2019073447A1).

According to some embodiments, the moving assembly 12 comprises a mechanical connection configured to move the transfer conveyor assembly 8 (more precisely, to rotate the transfer conveyor assembly 8 around the axis A) as a function of the speed differences between the conveyors 6 and 7 (more precisely, between the motorised pulleys 24 and 25).

Typically, in use, the store 1 is placed between a first machine (for example, a cigarette maker machine) and a second machine (for example, a packer machine) so as to compensate for the different speeds at which the first machine feeds the articles 2 to the store 1 and the second machine uses the articles 2 coming from the store. More precisely, the store 1 comprises a control system connected to the first and to the second machine (for receiving information on the speeds) and configured to adjust the speed of the conveyor 6 so as to adapt it to the speed of the first machine (and to adjust the speed of the conveyor 7 so as to adapt it to the speed of the second machine).

With particular reference to figures 11 and 12 and according to some non-limiting embodiments, the joining device 9' comprises a central element 42, on which, in use, the articles 2 shift from the first conveyor 6 to the transfer conveyor assembly 8. The centring elements 9" are arranged on opposite sides of the central element 42 (and are substantially integral to the central element 42).

In addition or alternatively, the joining device 10' comprises a central element 43, on which, in use, the articles 2 shift from the transfer conveyor assembly 8 to the second conveyor 7. The centring elements 10" are arranged on opposite sides of the central element 43 (and are substantially integral to the second central element 42).

In this way, tests have shown that the relative position of the transfer conveyor assembly 8 (in particular, of the joining devices 9' and 10') with respect to the conveyors 6 and 7 is more stable and precise.

Advantageously, though not necessarily, the joining device 9' comprises at least an adjustment device for adjusting the position of the centring elements 9" relative to the conveyor 6 (in particular, relative to the guide 27). In particular, in this way it is possible to adjust the position of the centring elements 9" so that they are in contact with the guide 27.

In addition or alternatively, the joining device 10' comprises at least an adjustment device for adjusting the position of the centring elements 10" relative to the conveyor 7 (in particular, relative to the guide 29). In particular, in this way it is possible to adjust the position of the centring elements 10" so that they are in contact with the guide 29.

According to non-limiting embodiments, an adjustment device is provided for each centring element 9" and 10".

In some non-limiting cases, each adjustment device comprises (is) an eccentric (which can be operated, for example, by means of a screwdriver or the like).

Advantageously, though not necessarily, the central element 42 has at least a distal portion 44 relative to the transfer conveyor assembly 8 (namely, arranged at a distal end with respect to the transfer conveyor assembly 8), which is tapered towards the conveyor 6.

Optionally, in addition or alternatively, the central element 43 has at least a distal portion 45 relative to the transfer conveyor assembly 8 (namely, arranged at a distal end with respect to the transfer conveyor assembly 8), which is tapered towards the second conveyor 7.

This makes it easier for the articles 2 to be transferred from and to the transfer conveyor assembly 8, thus reducing at the same time the risk of clogging.

According to some non-limiting embodiments, the central elements 42 act as chutes.

Advantageously, though not necessarily, the transporting element 25 (in particular, a belt and/or a chain) is configured to slide along at least the segment S1 and has at least a depression 46 (in particular, at least two depressions 46), which longitudinally extends along the transporting element 25.

In addition or alternatively, the transporting element 26 is configured to slide along at least the segment S2 and has at least a depression 47 (in particular, at least two depressions 47), which longitudinally extends along the transporting element 26.

In particular, the first central element 42 has at least a tine 48 (more in particular, at least two tines), which projects on the opposite side relative to the transfer conveyor assembly 8 (in particular, from the distal portion 44) and, in particular, at least partially extends inside the depression 46.

In addition or alternatively, the central element 43 has at least two tines 49, which project on the opposite side relative to the transfer conveyor assembly 8 (in particular, from the distal portion 45) and, in particular, (each) at least partially extend inside a (respective) depression 46.

It has been experimentally observed that, in this way, it is easier for the articles 2 to be transferred from and to the transfer conveyor assembly 8 and the risk of clogging is reduced.

Advantageously, though not necessarily, each tine 48 and 49 is tapered towards its free end (in particular, away from the transfer conveyor assembly 8).

Advantageously, though not necessarily, the joining device 9' comprises at least a lower roller 50 (in particular, a bearing), which is arranged in contact with the conveyor 6 (in particular, in contact with the transporting element 25; in particular, is arranged between the central element 42 and the conveyor 6) and is configured to help the first joining device 9' slide on the first conveyor 6. In particular, the lower roller 50 has a rotation axis transverse to the segment S1.

Tests have shown that, in this way, the sliding of the joining devices 9' and 10' is better and the risk of clogging is reduced.

In addition or alternatively, the joining device 10' comprises at least a lower roller 51 (in particular, a bearing), which is arranged in contact with the conveyor 7 (in particular, in contact with the transporting element 26; in particular, is arranged between the central element 43 and the conveyor 7) and is configured to help the second joining device 10' slide on the second conveyor 7. In particular, the lower roller 51 has a rotation axis transverse to the segment S2.

According to some non-limiting embodiments, the joining device 9' comprises at least two lower rollers 50 that are offset relative to one another (and/or staggered, in particular as regards the position along the segment S1) . In addition or alternatively, the joining device 10' comprises at least two lower rollers 51 that are offset relative to one another (and/or staggered, in particular as regards the position along the segment S2) .

Tests have shown that, in this way, the sliding of the joining devices 9' and 10' surprisingly is smoother (with smaller j olts) and the risk of clogging is reduced. This behaviour was particularly evident when the transporting elements 25 and 26 had an irregular surface (for example, they were chains).

It is supposed that this result is due to the fact that, with this structure, the lower rollers 50 (and/or 51) are not simultaneously located in recesses (discontinuities) of the transporting element 25 (and/or 26).

Advantageously, though not necessarily, the joining device 9' comprises at least an adjustment device for adjusting the position of the lower roller/s 50 relative to the conveyor 6 (in particular, relative to the transporting element 25). In addition or alternatively, the joining device 10' comprises at least an adjustment device for adjusting the position of the lower roller/s 51 relative to the conveyor 7 (in particular, relative to the transporting element 26).

In particular, in this way, it is possible to adjust the position of the lower roller/s 50 so that it/they is/are correctly in contact with the transporting element 25 and/or the position of the lower roller/s 51 so that it/they is/are correctly in contact with the transporting element 26.

According to non-limiting embodiments, an adjustment device is provided for each lower roller 50 and 51.

In some non-limiting cases, each adjustment device comprises (is) an eccentric (which can be operated, for example, by means of a screwdriver or the like).

Advantageously, though not necessarily, the conveyor assembly 3 comprises a hinge 52, which is arranged between the joining device 9' and the transfer conveyor assembly 8 and is configured to allow the joining device 9' to pivot relative to the transfer conveyor assembly 8 around a respective pivoting axis (in particular, transverse to the segment S1).

In addition or alternatively, the conveyor assembly 3 comprises a hinge 53, which is arranged between the joining device 10' and the transfer conveyor assembly 8 and is configured to allow the joining device 10' to pivot relative to the transfer conveyor assembly 8 around a respective pivoting axis (in particular, transverse to the segment S1).

In this case, too, a more fluid movement of the articles 2 and a reduction in the risk of clogging were surprisingly observed.

The store 1 according to the invention offers several advantages relative to the state of the art. Among others, it should be pointed out that, in this way, it is possible to have a relatively uncomplicated structure that permits relatively simple maintenance operations. Furthermore, the store 1 is particularly flexible, for it is able to also have an output station at the top (a particularly convenient position for the layouts of the current machines), and is delicate in handling the items 2. The connections of the transfer conveyor assembly 8 to the conveyors 6 and 7 are stable and reliable. The risks of clogging of articles 2 and/or that these clogs are large and/or that articles 2 are damaged are also reduced.

According to a further aspect of the invention, there is also provided the store 1 disclosed above.

According to a further aspect of the invention, there is provided a method of conveying articles 2, in particular substantially cylindrical articles (more in particular, of the tobacco processing industry), from an input station 4 to an output station 5; the method comprises:
a transfer step, during which a transfer conveyor assembly 8 conveys the articles 2 from the first conveyor 6 along a transfer segment IS of the path P from an input 9 to an output 10 (of the transfer segment IS). The transfer segment IS has at least an intermediate segment IS' with a variable length, along which the transfer conveyor assembly 8 conveys the articles 2 in a given direction (in particular, at least partially upwards). The transfer conveyor assembly 8 comprises at least a transporting element 11 (in particular, a belt and/or a chain), which (during the transfer step) at least partially accompanies the articles 2 along at least part of the intermediate segment IS' and has a front face (surface), which (during the transfer step) comes into contact with at least part of the articles 2, and a rear face (surface) substantially opposite the front face (surface), and at least a wall W, which is arranged behind the transporting element 11 (namely, on the side opposite the front face thereof) and has at least an oblong element ES, which supports the transporting element 11 from behind. The oblong element ES has a first end E connected to the input 9 or to the output 10 in a substantially integral manner.

The method further comprises a moving step, during which a moving assembly 12 moves the input 9 and/or the output 10 so as to change the length of the intermediate segment IS' and the position of the first end E in the given direction D. The moving assembly 12 comprises a deflector device DD, which, during said moving step, bends (deforms) the oblong element ES (crosswise) so as to change a length (the extension) of the oblong element ES in the given direction D.

In particular, the moving step is at least partially simultaneous with the transfer step (and, in particular, at least partially simultaneous with the first conveying step).

In particular, the articles 2 have an oblong shape. More in particular, the transfer conveyor assembly 8 conveys the articles 2 in a mass (namely, in contact with one another and in several layers - see for example the enlargement of the upper part of figure 1 and figure 15) and crosswise (namely, in a transverse direction, in particular perpendicular to their longitudinal extension).

Advantageously, though not necessarily, the deflector device DD, during the moving step, bends (deforms) the oblong element ES (crosswise) so that at least an end segment of the oblong element ES opposite the end E does not extend in the given direction D.

According to some non-limiting embodiments, the deflector device DD, during the moving step, moves the end segment of the oblong element ES, opposite said first end E, away and/or closer from/to the intermediate segment IS'.

Advantageously, though not necessarily, the deflector device DD comprises (in particular, is) a winder, which, during the moving step, winds the end segment of the oblong element ES (when the length of the intermediate segment IS' is reduced) and unwinds the end segment of the oblong element ES (when the length of the intermediate segment IS' is increased).

According to some non-limiting embodiments, the transfer conveyor assembly 8 comprises at least a further wall W', which supports the transporting element 11 from behind (namely, on the side of the rear face thereof) and has at least a further oblong element ES' having a further end E' connected to said output 10 in a substantially integral manner. In these cases, the moving assembly 12 comprises a further deflector device DD', which (during said moving step) bends (deforms) the further oblong element ES' (crosswise) so as to change a length (the extension) of the oblong element ES' in the given direction D (in particular, so that an end segment of the oblong element ES', opposite the further end E', does not extend in the given direction D; in particular, so that said end segment of the oblong element ES' moves away and/or closer from/to the intermediate segment IS'). In these cases, the first end E is connected to the input 9 in a substantially integral manner; the oblong element ES and the further oblong element ES' are arranged in succession along the intermediate segment IS'.

In particular, the further deflector device DD' comprises (in particular, is) a further winder, which (during the moving step) winds the end segment of the further oblong element ES' (when the length of the intermediate segment IS' is reduced) and unwinds the end segment of the further oblong element ES' (when the length of the intermediate segment IS' is increased).

According to some non-limiting embodiments, the method also comprises: a first conveying step, during which at least a transporting element 25 of a conveyor 6 conveys the articles 2 from the input station 4 along a first segment S1 of the path P;
a second conveying step, during which a conveyor 7 conveys the articles 2 to the output station 5 along a second segment S2 of the path P arranged downstream of the first segment S1. During the transfer step, the transfer conveyor assembly 8 conveys the articles 2 from the conveyor 6 to the conveyor 7 along the transfer segment IS of the path P and has the input 9 arranged in the area of the first segment S1 and the output 10 arranged in the area of the second segment S2 so as to feed the articles 2 to the second conveyor 7.

According to some embodiments, during the moving step, the moving assembly 12 moves the transfer conveyor assembly 8 so as to move the input 9 and the output 10 along the conveyors 6 and 7, respectively.

In particular, the conveyor assembly 3 comprises a joining device 9', which allows the articles 2 to move from the first conveyor 6 to the transfer conveyor assembly 8 and is movable on the first conveyor 6; and a joining device 10', which allows the articles 2 to move from the transfer conveyor assembly 8 to the second conveyor 7 and is movable on the conveyor 7.

The conveyor assembly 3 conveys the articles 2 from the input station 4 to the output station 5 along the path P with a variable length. The end E moves in a substantially integral manner to the joining device 9'. In particular, the further end E' moves in a substantially integral manner to the second joining device 10'.

Advantageously, though not necessarily, the method is implemented by the conveyor assembly 3 as described above.

### LIST OF THE REFERENCE NUMBERS OF THE FIGURES

- 1: store
- 2: articles
- 3: conveyor assembly
- 4: input station
- 5: output station
- 6: conveyor
- 7: conveyor
- 8: transfer conveyor assembly
- 9: input
- 10: output
- 11: transporting element
- 12: moving assembly
- 13: pulley
- 14: pulley
- 15: pulley
- 16: advancing device
- 17: plate
- 18: slits
- 19: flat supports
- 20: slits
- 21: deflector belt
- 22: deflector belt
- 23: motorised pulley
- 24: motorised pulley
- 25: transporting element
- 26: transporting element
- 27: guide
- 28: indent
- 29: guide
- 30: support structure
- 31: base
- 32: column
- 33: support assembly
- 34: support assembly
- 35: bearing
- 36: fixed portion
- 37: movable portion
- 38: arms
- 42: central element
- 43: central element
- 44: distal portion
- 45: distal portion
- 46: depression
- 47: depression
- 48: tine
- 49: tine
- 50: lower roller
- 51: lower roller
- 52: hinge
- 53: hinge
- 9': joining device
- 10': joining device
- 16': pulleys
- 9": centring elements
- 10": centring elements
- A: axis
- P: path
- S1: segment
- S2: segment
- IS: transfer segment
- SC1: connection portion
- SC2: connection portion
- D: given direction
- W: wall
- ES: oblong element
- DD: deflector device
- IS': intermediate segment
- R: guide
- E: end
- WR: winding roller
- W': wall
- ES': oblong element
- DD': deflector device
- E': end
- WR': winding roller
- C: cases

## Claims

1. A conveyor assembly (3) for conveying substantially cylindrical articles (2), in particular of the tobacco processing industry; the conveyor assembly (3) is configured to convey the articles (2) from an input station (4) to an output station (5) along a path (P) with a variable length;
the conveyor assembly (3) comprises at least a transfer conveyor assembly (8), which is configured to convey the articles (2) along at least a transfer segment (IS) of the path (P) from an input (9) to an output (10);
the transfer segment (IS) has at least an intermediate segment (IS') with a variable length and at least partially extending upwards;
the transfer conveyor assembly (8) is configured to convey the articles (2) along the intermediate segment (IS') in a given direction (D);
the transfer conveyor assembly (8) comprises at least a transporting element (11), in particular a belt and/or a chain, which is configured to at least partially accompany the articles (2) along at least part of the intermediate segment (IS') and has a front face configured to come into contact with at least part of the articles (2) and a rear face substantially opposite the front face;
the transfer conveyor assembly (8) comprises at least a wall (W), which is arranged behind the transporting element (11) and has at least an oblong element (ES), which extends along at least part of the intermediate segment (IS') so as to support the transporting element (11) from behind;
said oblong element (ES) having a first end (E) connected to said input (9) or to said output (10) in a substantially integral manner;
the conveyor assembly (3) further comprising a moving assembly (12), which is configured to move said input (9) and/or said output (10) so as to change a length of the intermediate segment (IS') and move said first end (E) in said given direction (D);
the moving assembly (12) comprising a deflector device (DD), which is configured to bend said oblong element (ES) so that at least an end segment of the oblong element (ES) opposite the end (E) does not extend in the given direction (D) in order to change a length of the oblong element (ES) in the given direction (D).

2. The conveyor assembly (3) according to claim 1, wherein the deflector device (DD) comprises, in particular is, a winder, which is configured to wind and unwind said end segment of the oblong element (ES); in particular, the transfer conveyor assembly (8) is configured to convey the articles (2) along the intermediate segment (IS') at least partially upwards.

3. The conveyor assembly (3) according to claim 1 or 2, wherein the transfer conveyor assembly (8) comprises at least a further wall (W'), which is arranged behind the transporting element (11) and has at least a further oblong element (ES') configured to support the transporting element (11) from behind and having a further end (E') connected to said output (10) in a substantially integral manner;
the moving assembly (12) comprising a further deflector device (DD'), which is configured to bend said further oblong element (ES') so that an end segment of the oblong element (ES') does not extend in the given direction (D);
said first end (E) being connected to said input (9) in a substantially integral manner;
said oblong element (ES) and said further oblong element (ES') being arranged one after the other along the intermediate segment (IS').

4. The conveyor assembly (3) according to claim 3, wherein said further deflector device (DD') comprises, in particular is, a further winder, which is configured to wind said end segment of said further oblong element (ES') and to unwind said end segment of said further oblong element (ES').

5. The conveyor assembly (3) according to any one of the preceding claims, wherein said oblong element (ES) is an oblong plate or a roller shutter.

6. The conveyor assembly (3) according to any one of the preceding claims, wherein said oblong element (ES) is an oblong plate.

7. The conveyor assembly (3) according to any one of the preceding claims, wherein said oblong element (ES) is a metal band, in particular, made of steel, more in particular stainless steel; in particular, also said further oblong element (ES') is a metal band, in particular, made of steel, more in particular stainless steel.

8. The conveyor assembly (3) according to any one of the preceding claims, wherein the oblong element (ES), in particular said further oblong element (ES') as well, is an oblong plate, in particular a metal band, with a thickness ranging from about 0.1 mm, in particular from about 0.2 mm; more in particular, from about 0.25 mm to about 0.5 mm, in particular to about 0.4 mm; more in particular, to about 0.35 mm; in particular, the oblong element (ES), in particular said further oblong element (ES') as well, is made of steel, more in particular, stainless steel.

9. The conveyor assembly (3) according to any one of the preceding claims, wherein the oblong element (ES), in particular also said further oblong element (ES), has a modulus of elasticity, Young's modulus, of at least about 170 GPa; in particular, the oblong element (ES), in particular also said further oblong element (ES'), is made of a C72 UNI 10270-1 and/or 52SiCrNi5 UNI 10270-2 spring steel and/or of an ASTM-A36 steel and/or of an AISI301 steel and/or the like.

10. The conveyor assembly (3) according to any one of the preceding claims, wherein the transfer conveyor assembly (8) comprises two guides (R), which extend in the given direction (D) along at least part of the intermediate segment (IS') and are configured to each accommodate and have a side edge of the oblong element (ES), in particular also of said further oblong element (ES), slide inside them.

11. The conveyor assembly (3) according to any one of the preceding claims, wherein the conveyor assembly (3) comprises a first conveyor (6), which is configured to feed the articles (2) from the input station (4) along a first segment (S1) of the path (P); at least a second conveyor (7), which is configured to feed the articles (2) to the output station (5) along a second segment (S2) of the path (P);
the transfer conveyor assembly (8) is configured to convey the articles (2) from the first conveyor (6) to the second conveyor (7) along said transfer segment (IS) of the path (P) and has said input (9), which is arranged in the area of the first segment (S1) for receiving the articles (2) from the first conveyor (6), and said output (10), which is arranged in the area of the second segment (S2) for feeding the articles (2) to the second conveyor (7); the first segment (S1) extends from the input station (4) to the input (9); the second segment (S2) extends from the output (10) to the output station (5);
said moving assembly (12) is configured to move the transfer conveyor assembly (8) so as to move said input (9) and said output (10) along the first and the second conveyor (6, 7), respectively.

12. The conveyor assembly (3) according to claim 11, wherein the first and the second conveyor (6, 7) are arranged in such a way that one is at least partially above the other one, in particular the second conveyor (7) is at least partially arranged above the first conveyor (6); the first conveyor (6) has at least a turn; the second conveyor (7) has at least a turn; the turning direction of the first conveyor (6) being contrary to the turning direction of the second conveyor (7).

13. The conveyor assembly (3) according to claim 11 or 12, wherein the first and the second conveyor (6, 7) have turns that are substantially coaxial to one another; in particular, the first conveyor (6) has a plurality of first turns; the second conveyor (7) has a plurality of second turns having the same radius and the same distance as the first turns.

14. The conveyor assembly (3) according to any one of the claims from 11 to 13, wherein the conveyor assembly (3) comprises a first joining device (9'), which is configured to allow the articles (2) to move from the first conveyor (6) to the transfer conveyor assembly (8) and is movable on the first conveyor (6); and a second joining device (10'), which is configured to allow the articles (2) to move from the transfer conveyor assembly (8) to the second conveyor (7) and is movable on the second conveyor (7);
said first end (E) being connected to the first joining device (9') in a substantially integral manner; in particular, said further end (E') being connected to the second joining device (10') in a substantially integral manner.

15. A method of conveying articles (2), in particular substantially cylindrical articles of the tobacco processing industry, from an input station (4) to an output station (5) along a path (P) with a variable length;
the method comprises:
a transfer step, during which a transfer conveyor assembly (8) conveys the articles (2) along a transfer segment (IS) of the path (P) from an input (9) to an output (10);
the transfer segment (IS) has at least an intermediate segment (IS') with a variable length, along which the transfer conveyor assembly (8) conveys the articles (2) in a given direction (D);
the transfer conveyor assembly (8) comprises at least a transporting element (11), in particular a belt and/or a chain, which at least partially accompanies the articles (2) along at least part of the intermediate segment (IS') and has a front face, which comes into contact with at least part of the articles (2), and a rear face substantially opposite the front face, and at least a wall (W), which is arranged behind the transporting element (11) and has at least an oblong element (ES), which supports the transporting element (11) from behind;
said oblong element (ES) having a first end (E) connected to said input (9) or to said output (10) in a substantially integral manner;
the method further comprises a moving step, during which a moving assembly (12) moves said input (9) and/or said output (10) so as to change the length of the intermediate segment (IS') and the position of said first end (E) in said given direction (D);
the moving assembly (12) comprising a deflector device (DD), which, during said moving step, bends said oblong element (ES) so as to change a length of the oblong element (ES) in the given direction (D).

16. The method according to claim 15, wherein the deflector device (DD), during said moving step, bends said oblong element (ES) so that at least an end segment of the oblong element (ES) opposite the end (E) does not extend in the given direction (D); the moving step is at least partially simultaneous with the transfer and, in particular, at least partially simultaneous with the first conveying step.

17. The method according to claim 15 or 16, wherein the deflector device (DD) comprises, in particular is, a winder, which, during said moving step, winds said end segment of the oblong element (ES) and unwinds said end segment of the oblong element (ES).

18. The method according to any one of the claims from 15 to 17, wherein the transfer conveyor assembly (8) comprises at least a further wall (W'), which is arranged behind the transporting element (11) and has at least a further oblong element (ES') having a further end (E') connected to said output (10) in a substantially integral manner;
the moving assembly (12) comprising a further deflector device (DD'), which bends said further oblong element (ES') so that an end segment of said further oblong element (ES') opposite said further end (E') does not extend in the given direction (D);
said first end (E) being connected to said input (9) in a substantially integral manner;
said oblong element (ES) and said further oblong element (ES') being arranged one after the other along the intermediate segment (IS');
in particular, said further deflector device (DD') comprises, in particular is,
a further winder, which winds said end segment of said further oblong element (ES') and unwinds said end segment of said further oblong element (ES').

19. The method according to claim 18 and comprising:
a first conveying step, during which at least a further transporting element (25) of a first conveyor (6) feeds the articles (2) from the input station (4) along a first segment (S1) of the path (P);
a second conveying step, during which a second conveyor (7) feeds the articles (2) to the output station (5) along a second segment (S2) of the path (P) arranged downstream of the first segment (S1);
during the transfer step, the transfer conveyor assembly (8) conveys the articles (2) from the first conveyor (6) to the second conveyor (7) along the transfer segment (IS) of the path (P) and has said input (9) arranged in the area of the first segment (S1) and the output (10) arranged in the area of the second segment (S2) so as to feed the articles (2) to the second conveyor (7);
during the moving step, the moving assembly (12) moves the transfer conveyor assembly (8) so as to move said input (9) and said output (10) along the first and the second conveyor (6, 7), respectively;
the conveyor assembly (3) comprising a first joining device (9'), which allows the articles (2) to move from the first conveyor (6) to the transfer conveyor assembly (8) and is movable on the first conveyor (6); and a second joining device (10'), which allows the articles (2) to move from the transfer conveyor assembly (8) to the second conveyor (7) and is movable on the second conveyor (7);
the conveyor assembly (3) conveys the articles (2) from the input station (4) to the output station (5) along the path (P) with a variable length;
said first end (E) moving substantially integrally to the first joining device (9'); in particular, said further end (E') moving substantially integrally to the second joining device (10').

20. The method according to any one of the claims from 15 to 19, wherein, during the transfer step, the transfer conveyor assembly (8) conveys the articles (2) along the intermediate segment (IS') at least partially upwards.

21. The method according to any one of the claims from 15 to 20 and implemented by means of a conveyor assembly (3) according to any one of the claims from 1 to 14.

## Patentansprüche

1. Förderanordnung (3) zum Fördern von im Wesentlichen zylindrischen Artikeln (2), insbesondere der tabakverarbeitenden Industrie; wobei die Förderanordnung (3) konfiguriert ist, die Artikel (2) entlang eines Pfades (P) mit einer variablen Länge von einer Eingangsstation (4) zu einer Ausgangsstation (5) zu fördern;
wobei die Förderanordnung (3) zumindest eine Umladeförderanordnung (8) umfasst, die konfiguriert ist, die Artikel (2) zumindest entlang eines Umladesegments (IS) des Pfades (P) von einer Eingabe (9) zu einer Ausgabe (10) zu fördern;
wobei das Umladesegment (IS) zumindest ein Zwischensegment (IS') mit einer variablen Länge, das sich zumindest teilweise nach oben erstreckt, aufweist;
wobei die Umladeförderanordnung (8) konfiguriert ist, die Artikel (2) entlang des Zwischensegments (IS') in einer gegebenen Richtung (D) zu fördern;
wobei die Umladeförderanordnung (8) zumindest ein Transportelement (11), insbesondere ein Band und/oder eine Kette, umfasst, das konfiguriert ist, die Artikel (2) entlang zumindest eines Abschnitts des Zwischensegments (IS') zumindest teilweise zu begleiten und eine vordere Fläche, die konfiguriert ist, zumindest mit einem Teil der Artikel (2) in Kontakt zu gelangen, und eine hintere Fläche, die im Wesentlichen der vorderen Fläche gegenüberliegt, aufweist;
wobei die Umladeförderanordnung (8) zumindest eine Wand (W) umfasst, die hinter dem Transportelement (11) angeordnet ist und zumindest ein langes Element (ES) aufweist, das sich entlang zumindest eines Abschnitts des Zwischensegments (IS') erstreckt, derart, um das Transportelement (11) von hinten zu tragen;
wobei das lange Element (ES) ein erstes Ende (E) aufweist, das auf eine im Wesentlichen integrale Weise mit der Eingabe (9) oder mit der Ausgabe (10) verbunden ist;
wobei die Förderanordnung (3) ferner eine Bewegungsanordnung (12) umfasst, die konfiguriert ist, die Eingabe (9) und/oder die Ausgabe (10) zu bewegen, derart, um eine Länge des Zwischensegments (IS') zu ändern und das erste Ende (E) in der gegebenen Richtung (D) zu bewegen;
wobei die Bewegungsanordnung (12) eine Ablenkvorrichtung (DD) umfasst, die konfiguriert ist, das lange Element (ES) zu biegen, derart, dass sich zumindest ein Endsegment des langen Elements (ES), das dem Ende (E) gegenüberliegt, nicht in der gegebenen Richtung (D) erstreckt, um eine Länge des langen Elements (ES) in der gegebenen Richtung (D) zu ändern.

2. Förderanordnung (3) nach Anspruch 1, wobei die Ablenkvorrichtung (DD) eine Wickeleinrichtung umfasst, insbesondere eine Wickeleinrichtung ist, die konfiguriert ist, das Endsegment des langen Elements (ES) aufzuwickeln und abzuwickeln, wobei die Umladeförderanordnung (8) insbesondere konfiguriert ist, die Artikel (2) entlang des Zwischensegments (IS') zumindest teilweise nach oben zu fördern.

3. Förderanordnung (3) nach Anspruch 1 oder 2, wobei die Umladeförderanordnung (8) zumindest eine weitere Wand (W') umfasst, die hinter dem Transportelement (11) angeordnet ist und zumindest ein weiteres langes Element (ES') aufweist, das konfiguriert ist, das Transportelement (11) von hinten zu tragen und ein weiteres Ende (E') aufweist, das auf eine im Wesentlichen integrale Weise mit der Ausgabe (10) verbunden ist;
wobei die Bewegungsanordnung (12) eine weitere Ablenkvorrichtung (DD') umfasst, die konfiguriert ist, das weitere lange Element (ES') zu biegen, derart, dass sich ein Endsegment des langen Elements (ES') nicht in der gegebenen Richtung (D) erstreckt;
wobei das erste Ende (E) auf eine im Wesentlichen integrale Weise mit der Eingabe (9) verbunden ist;
wobei das lange Element (ES) und das weitere lange Element (ES') nacheinander entlang des Zwischensegments (IS') angeordnet sind.

4. Förderanordnung (3) nach Anspruch 3, wobei die weitere Ablenkvorrichtung (DD') eine weitere Wickeleinrichtung umfasst, insbesondere eine weitere Wickeleinrichtung ist, die konfiguriert ist, das Endsegment des weiteren langen Elements (ES') aufzuwickeln und das Endsegment des weiteren langen Elements (ES') abzuwickeln.

5. Förderanordnung (3) nach einem der vorhergehenden Ansprüche, wobei das lange Element (ES) eine lange Platte oder ein Rolltor ist

6. Förderanordnung (3) nach einem der vorhergehenden Ansprüche, wobei das lange Element (ES) eine lange Platte ist.

7. Förderanordnung (3) nach einem der vorhergehenden Ansprüche, wobei das lange Element (ES) ein Metallband ist, das insbesondere aus Stahl, weiter insbesondere aus Edelstahl, hergestellt ist, wobei insbesondere außerdem das weitere lange Element (ES') ein Metallband ist, das insbesondere aus Stahl, weiter insbesondere aus Edelstahl, hergestellt ist.

8. Förderanordnung (3) nach einem der vorhergehenden Ansprüche, wobei das lange Element (ES), insbesondere auch das weitere lange Element (ES'), eine lange Platte, insbesondere ein Metallband, mit einer Dicke, die im Bereich von etwa 0,1 mm, insbesondere von etwa 0,2 mm, weiter insbesondere von etwa 0,25 mm, bis etwa 0,5 mm, insbesondere bis etwa 0,4 mm, weiter insbesondere bis etwa 0,35 mm, liegt, ist; wobei insbesondere das lange Element (ES), insbesondere auch das weitere lange Element (ES'), aus Stahl, weiter insbesondere aus Edelstahl, hergestellt ist.

9. Förderanordnung (3) nach einem der vorhergehenden Ansprüche, wobei das lange Element (ES), insbesondere auch das weitere lange Element (ES'), einen Elastizitätsmodul, Young'schen Modul, von mindestens etwa 170 GPa aufweist; wobei insbesondere das lange Element (ES), insbesondere auch das weitere lange Element (ES'), aus einem C72 UNI 10270-1-Federstahl und/oder einem 52SiCrNi5 UNI 10270-2-Federstahl und/oder aus einem ASTM-A36-Stahl und/oder aus einem AISI301-Stahl und/oder dergleichen hergestellt ist.

10. Förderanordnung (3) nach einem der vorhergehenden Ansprüche, wobei die Umladeförderanordnung (8) zwei Führungen (R) umfasst, die sich in der gegebenen Richtung (D) entlang zumindest eines Abschnitts des Zwischensegments (IS') erstrecken und konfiguriert sind, jeweils eine Seitenkante des langen Elements (ES), insbesondere auch des weiteren langen Elements (ES'), aufzunehmen und sie in ihrem Innern gleiten zu lassen.

11. Förderanordnung (3) nach einem der vorhergehenden Ansprüche, wobei die Förderanordnung (3) einen ersten Förderer (6), der konfiguriert ist, die Artikel (2) von der Eingangsstation (4) entlang eines ersten Segments (S1) des Pfades (P) zuzuführen; zumindest einen zweiten Förderer (7), der konfiguriert ist, die Artikel (2) zu der Ausgangsstation (5) entlang eines zweiten Segments (S2) des Pfades (P) zuzuführen, umfasst;
wobei die Umladeförderanordnung (8) konfiguriert ist, die Artikel (2) entlang des Umladesegments (IS) des Pfades (P) von dem ersten Förderer (6) zu dem zweiten Förderer (7) zu fördern, und die Eingabe (9), die sich zum Aufnehmen der Artikel (2) von dem ersten Förderer (6) in dem Bereich des ersten Segments (S1) angeordnet ist, und die Ausgabe (10), die zum Zuführen der Artikel (2) zu dem zweiten Förderer (7) in dem Bereich des zweiten Segments (S2) angeordnet ist, aufweist; wobei sich das erste Segment (S1) von der Eingangsstation (4) zu der Eingabe (9) erstreckt, wobei sich das zweite Segment (S2) von der Ausgabe (10) zu der Ausgangsstation (5) erstreckt;
wobei die Bewegungsanordnung (12) konfiguriert ist, die Umladeförderanordnung (8) zu bewegen, derart, um die Eingabe (9) und die Ausgabe (10) entlang dem ersten bzw. dem zweiten Förderer (6, 7) zu bewegen.

12. Förderanordnung (3) nach Anspruch 11, wobei der erste und der zweite Förderer (6, 7) in einer solchen Weise angeordnet sind, dass sich einer zumindest teilweise über dem anderen befindet, dass insbesondere der zweite Förderer (7) zumindest teilweise über dem ersten Förderer (6) angeordnet ist; wobei der erste Förderer (6) zumindest eine Windung aufweist; wobei der zweite Förderer (7) mindestens eine Windung aufweist; wobei die Windungsrichtung des ersten Förderers (6) zu der Windungsrichtung des zweiten Förderers (7) entgegengesetzt ist.

13. Förderanordnung (3) nach Anspruch 11 oder 12, wobei der erste und der zweite Förderer (6, 7) Windungen aufweisen, die im Wesentlichen zueinander koaxial sind; wobei insbesondere der erste Förderer (6) mehrere erste Windungen aufweist; der zweite Förderer (7) mehrere zweite Windungen aufweist, die den gleichen Radius und die gleiche Distanz wie die ersten Windungen aufweisen.

14. Förderanordnung (3) nach einem der Ansprüche von 11 bis 13, wobei die Förderanordnung (3) eine erste Verbindungsvorrichtung (9'), die konfiguriert ist zu ermöglichen, dass sich die Artikel (2) von dem ersten Förderer (6) zu der Umladeförderanordnung (8) bewegen, und die auf dem ersten Förderer (6) beweglich ist; und eine zweite Verbindungsvorrichtung (10'), die konfiguriert ist zu ermöglichen, dass sich die Artikel (2) von der Umladeförderanordnung (8) zu dem zweiten Förderer (7) bewegen, und die auf dem zweiten Förderer (7) beweglich ist, umfasst;
wobei das erste Ende (E) auf eine im Wesentlichen integrale Weise mit der ersten Verbindungsvorrichtung (9') verbunden ist; wobei insbesondere das weitere Ende (E') auf eine im Wesentlichen integrale Weise mit der zweiten Verbindungsvorrichtung (10') verbunden ist.

15. Verfahren zum Fördern von Artikeln (2), insbesondere von im Wesentlichen zylindrischen Artikeln, der tabakverarbeitenden Industrie von einer Eingangsstation (4) zu einer Ausgangsstation (5) entlang eines Pfades (P) mit einer variablen Länge;
wobei das Verfahren umfasst:
einen Umladeschritt, während dessen eine Umladeförderanordnung (8) die Artikel (2) entlang eines Umladesegments (IS) des Pfades (P) von einer Eingabe (9) zu einer Ausgabe (10) fördert;
wobei das Umladesegment (IS) zumindest ein Zwischensegment (IS') mit einer variablen Länge aufweist, entlang dem die Umladeförderanordnung (8) die Artikel (2) in einer gegebenen Richtung (D) fördert;
wobei die Umladeförderanordnung (8) zumindest ein Transportelement (11), insbesondere ein Band und/oder eine Kette, das die Artikel (2) entlang zumindest eines Abschnitts des Zwischensegments (IS') zumindest teilweise begleitet und eine vordere Fläche, die zumindest mit einem Teil der Artikel (2) in Kontakt gelangt, und eine hintere Fläche, die im Wesentlichen der vorderen Fläche gegenüberliegt, aufweist, und zumindest eine Wand (W), die hinter dem Transportelement (11) angeordnet ist und zumindest ein langes Element (ES) aufweist, das das Transportelement (11) von hinten trägt, umfasst;
wobei das lange Element (ES) ein erstes Ende (E) aufweist, das auf eine im Wesentlichen integrale Weise mit der Eingabe (9) oder mit der Ausgabe (10) verbunden ist;
wobei das Verfahren ferner einen Bewegungsschritt umfasst, während dessen eine Bewegungsanordnung (12) die Eingabe (9) und/oder die Ausgabe (10) bewegt, derart, um die Länge des Zwischensegments (IS') und die Position des ersten Endes (E) in der gegebenen Richtung (D) zu ändern;
wobei die Bewegungsanordnung (12) eine Ablenkvorrichtung (DD) umfasst, die während des Bewegungsschritts das lange Element (ES) biegt, derart, um eine Länge des langen Elements (ES) in der gegebenen Richtung (D) zu ändern.

16. Verfahren nach Anspruch 15, wobei die Ablenkvorrichtung (DD) während des Bewegungsschritts das lange Element (ES) biegt, derart, dass sich zumindest ein Endsegment des langen Elements (ES), das dem Ende (E) gegenüberliegt, nicht in der gegebenen Richtung (D) erstreckt; wobei der Bewegungsschritt zumindest teilweise gleichzeitig mit dem Umladeschritt und insbesondere zumindest teilweise gleichzeitig mit dem ersten Förderschritt stattfindet.

17. Verfahren nach Anspruch 15 oder 16, wobei die Ablenkvorrichtung (DD) eine Wickeleinrichtung umfasst, insbesondere eine Wickeleinrichtung ist, die während des Bewegungsschritts das Endsegment des langen Elements (ES) aufwickelt und das Endsegment des langen Elements (ES) abwickelt.

18. Verfahren nach einem der Ansprüche von 15 bis 17, wobei die Umladeförderanordnung (8) zumindest eine weitere Wand (W') umfasst, die hinter dem Transportelement (11) angeordnet ist und zumindest ein weiteres langes Element (ES') aufweist, das ein weiteres Ende (E') aufweist, das auf eine im Wesentlichen integrale Weise mit der Ausgabe (10) verbunden ist;
wobei die Bewegungsanordnung (12) eine weitere Ablenkvorrichtung (DD') umfasst, die das weitere lange Element (ES') biegt, derart, dass sich ein Endsegment des weiteren langen Elements (ES'), das dem weiteren Ende (E') gegenüberliegt, nicht in der gegebenen Richtung (D) erstreckt;
wobei das erste Ende (E) auf eine im Wesentlichen integrale Weise mit der Eingabe (9) verbunden ist;
wobei das lange Element (ES) und das weitere lange Element (ES') nacheinander entlang des Zwischensegments (IS') angeordnet sind;
wobei insbesondere die weitere Ablenkvorrichtung (DD') eine weitere Wickeleinrichtung umfasst, insbesondere eine weitere Wickeleinrichtung ist, die das Endsegment des weiteren langen Elements (ES') aufwickelt und das Endsegment des weiteren langen Elements (ES') abwickelt.

19. Verfahren nach Anspruch 18 und umfassend:
einen ersten Förderschritt, während dessen zumindest ein weiteres Transportelement (25) eines ersten Förderers (6) die Artikel (2) von der Eingangsstation (4) entlang eines ersten Segments (S1) des Pfades (P) zuführt;
einen zweiten Förderschritt, bei dem ein zweiter Förderer (7) die Artikel (2) entlang eines zweiten Segments (S2) des Pfades (P), das stromabwärts des ersten Segments (S1) angeordnet ist, zu der Ausgangsstation (5) zuführt;
wobei die Umladeförderanordnung (8) während des Umladeschritts die Artikel (2) entlang des Umladesegments (IS) des Pfades (P) von dem ersten Förderer (6) zu dem zweiten Förderer (7) fördert und die Eingabe (9), die in dem Bereich des ersten Segments (S1) angeordnet ist, und die Ausgabe (10), die in dem Bereich des zweiten Segments (S2) angeordnet ist, um die Artikel (2) dem zweiten Förderer (7) zuzuführen, aufweist;
wobei die Bewegungsanordnung (12) während des Bewegungsschritts die Umladeförderanordnung (8) bewegt, derart, um die Eingabe (9) und die Ausgabe (10) entlang des ersten bzw. des zweiten Förderers (6, 7) zu bewegen;
wobei die Förderanordnung (3) eine erste Verbindungsvorrichtung (9'), die ermöglicht, dass sich die Artikel (2) von dem ersten Förderer (6) zu der Umladeförderanordnung (8) bewegen, und auf dem ersten Förderer (6) beweglich ist; und eine zweite Verbindungsvorrichtung (10'), die ermöglicht, dass sich die Artikel (2) von der Umladeförderanordnung (8) zu dem zweiten Förderer (7) bewegen, und auf dem zweiten Förderer (7) beweglich ist, umfasst;
wobei die Förderanordnung (3) die Artikel (2) entlang des Pfades (P) mit einer variablen Länge von der Eingangsstation (4) zu der Ausgangsstation (5) fördert;
wobei sich das erste Ende (E) im Wesentlichen integral mit der ersten Verbindungsvorrichtung (9') bewegt; wobei sich insbesondere das weitere Ende (E') im Wesentlichen integral mit der zweiten Verbindungsvorrichtung (10') bewegt.

20. Verfahren nach einem der Ansprüche von 15 bis 19, wobei die Umladeförderanordnung (8) während des Umladeschritts die Artikel (2) entlang des Zwischensegments (IS') zumindest teilweise nach oben fördert.

21. Verfahren nach einem der Ansprüche von 15 bis 20 und das mittels einer Förderanordnung (3) nach einem der Ansprüche von 1 bis 14 implementiert wird.

## Revendications

1. Ensemble convoyeur (3) pour le convoyage d'articles (2) sensiblement cylindriques, en particulier de l'industrie de transformation du tabac ; l'ensemble convoyeur (3) est configuré pour convoyer les articles (2) d'une station d'entrée (4) à une station de sortie (5) le long d'un chemin (P) de longueur variable ;
l'ensemble convoyeur (3) comprend au moins un ensemble convoyeur de transfert (8), qui est configuré pour convoyer les articles (2) le long d'au moins un segment de transfert (IS) du chemin (P) d'une entrée (9) à une sortie (10) ;
le segment de transfert (IS) présente au moins un segment intermédiaire (IS') de longueur variable s'étendant au moins partiellement vers le haut ;
l'ensemble convoyeur de transfert (8) est configuré pour convoyer les articles (2) le long du segment intermédiaire (IS') dans une direction donnée (D) ;
l'ensemble convoyeur de transfert (8) comprend au moins un élément de transport (11), en particulier une courroie et/ou une chaîne, qui est configuré pour accompagner au moins partiellement les articles (2) le long d'au moins une partie du segment intermédiaire (IS') et présente une face avant configurée pour entrer en contact avec au moins une partie des articles (2) et une face arrière sensiblement opposée à la face avant ;
l'ensemble convoyeur de transfert (8) comprend au moins une paroi (W), qui est agencée derrière l'élément de transport (11) et présente au moins un élément oblong (ES), qui s'étend le long d'au moins une partie du segment intermédiaire (IS') de manière à supporter l'élément de transport (11) par l'arrière ;
ledit élément oblong (ES) présentant une première extrémité (E) reliée à ladite entrée (9) ou à ladite sortie (10) de manière sensiblement intégrale ;
l'ensemble convoyeur (3) comprenant en outre un ensemble de déplacement (12), qui est configuré pour déplacer ladite entrée (9) et/ou ladite sortie (10) de manière à modifier une longueur du segment intermédiaire (IS') et déplacer ladite première extrémité (E) dans ladite direction donnée (D) ;
l'ensemble de déplacement (12) comprenant un dispositif déflecteur (DD), qui est configuré pour plier ledit élément oblong (ES) de sorte qu'au moins un segment d'extrémité de l'élément oblong (ES) opposé à l'extrémité (E) ne s'étende pas dans la direction donnée (D) afin de modifier une longueur de l'élément oblong (ES) dans la direction donnée (D).

2. Ensemble convoyeur (3) selon la revendication 1, dans lequel le dispositif déflecteur (DD) comprend, en particulier est, un enrouleur, qui est configuré pour enrouler et dérouler ledit segment d'extrémité de l'élément oblong (ES) ; en particulier, l'ensemble convoyeur de transfert (8) est configuré pour convoyer les articles (2) le long du segment intermédiaire (IS') au moins partiellement vers le haut.

3. Ensemble convoyeur (3) selon la revendication 1 ou 2, dans lequel l'ensemble convoyeur de transfert (8) comprend au moins une autre paroi (W'), qui est agencée derrière l'élément de transport (11) et présente au moins un autre élément oblong (ES') configuré pour supporter l'élément de transport (11) par l'arrière et présentant une autre extrémité (E') reliée à ladite sortie (10) de manière sensiblement intégrale ;
l'ensemble de déplacement (12) comprenant un autre dispositif déflecteur (DD'), qui est configuré pour plier ledit autre élément oblong (ES') de sorte qu'un segment d'extrémité de l'élément oblong (ES') ne s'étende pas dans la direction donnée (D) ;
ladite première extrémité (E) étant reliée à ladite entrée (9) de manière sensiblement intégrale ;
ledit élément oblong (ES) et ledit autre élément oblong (ES') étant agencés l'un après l'autre le long du segment intermédiaire (IS').

4. Ensemble convoyeur (3) selon la revendication 3, dans lequel ledit autre dispositif déflecteur (DD') comprend, en particulier est, un autre enrouleur, qui est configuré pour enrouler ledit segment d'extrémité dudit autre élément oblong (ES') et pour dérouler ledit segment d'extrémité dudit autre élément oblong (ES').

5. Ensemble convoyeur (3) selon l'une quelconque des revendications précédentes, dans lequel ledit élément oblong (ES) est une plaque oblongue ou un volet roulant.

6. Ensemble convoyeur (3) selon l'une quelconque des revendications précédentes, dans lequel ledit élément oblong (ES) est une plaque oblongue.

7. Ensemble convoyeur (3) selon l'une quelconque des revendications précédentes, dans lequel ledit élément oblong (ES) est une bande métallique, notamment en acier, et plus particulièrement en acier inoxydable ; en particulier, ledit autre élément oblong (ES') est également une bande métallique, notamment en acier, et plus particulièrement en acier inoxydable.

8. Ensemble convoyeur (3) selon l'une quelconque des revendications précédentes, dans lequel l'élément oblong (ES), en particulier ledit autre élément oblong (ES'), est également une plaque oblongue, en particulier une bande métallique, avec une épaisseur allant d'environ 0,1 mm, en particulier d'environ 0,2 mm ; plus particulièrement, d'environ 0,25 mm à environ 0,5 mm, en particulier à environ 0,4 mm ; plus particulièrement, à environ 0,35 mm, en particulier, l'élément oblong (ES), en particulier ledit autre élément oblong (ES') également, est en acier, plus particulièrement en acier inoxydable.

9. Ensemble convoyeur (3) selon l'une quelconque des revendications précédentes, dans lequel l'élément oblong (ES), en particulier également ledit autre élément oblong (ES), présente un module d'élasticité, c'est-à-dire un module de Young, d'au moins environ 170 GPa ; en particulier, l'élément oblong (ES), en particulier également ledit autre élément oblong (ES), est fabriqué en acier à ressort C72 UNI 10270-1 et/ou 52SiCrNi5 UNI 10270-2 et/ou en acier ASTM-A36 et/ou en acier AISI301 et/ou similaire.

10. Ensemble convoyeur (3) selon l'une quelconque des revendications précédentes, dans lequel l'ensemble convoyeur de transfert (8) comprend deux guides (R), qui s'étendent dans la direction donnée (D) le long d'au moins une partie du segment intermédiaire (IS') et sont configurés pour chacun accueillir et faire en sorte qu'un bord latéral de l'élément oblong (ES), en particulier également dudit autre élément oblong (ES), coulisse à l'intérieur d'eux.

11. Ensemble convoyeur (3) selon l'une quelconque des revendications précédentes, dans lequel l'ensemble convoyeur (3) comprend un premier convoyeur (6), qui est configuré pour alimenter les articles (2) depuis la station d'entrée (4) le long d'un premier segment (S1) du chemin (P) ; au moins un second convoyeur (7), qui est configuré pour alimenter les articles (2) vers la station de sortie (5) le long d'un second segment (S2) du chemin (P) ;
l'ensemble convoyeur de transfert (8) est configuré pour convoyer les articles (2) du premier convoyeur (6) vers le second convoyeur (7) le long dudit segment de transfert (IS) du chemin (P) et présente ladite entrée (9), qui est agencée dans la zone du premier segment (S1) pour recevoir les articles (2) depuis le premier convoyeur (6), et ladite sortie (10), qui est agencée dans la zone du second segment (S2) pour alimenter les articles (2) vers le second convoyeur (7) ; le premier segment (S1) s'étend de la station d'entrée (4) à l'entrée (9) ; le second segment (S2) s'étend de la sortie (10) à la station de sortie (5) ;
ledit ensemble de déplacement (12) est configuré pour déplacer l'ensemble convoyeur de transfert (8) de manière à déplacer ladite entrée (9) et ladite sortie (10) le long respectivement des premier et second convoyeurs (6, 7).

12. Ensemble convoyeur (3) selon la revendication 11, dans lequel les premier et second convoyeurs (6, 7) sont agencés de manière à ce que l'un soit au moins partiellement au-dessus de l'autre, en particulier que le second convoyeur (7) soit au moins partiellement agencé au-dessus du premier convoyeur (6) ; le premier convoyeur (6) présente au moins un virage ; le second convoyeur (7) présente au moins un virage ; le sens de rotation du premier convoyeur (6) étant opposé au sens de rotation du second convoyeur (7).

13. Ensemble convoyeur (3) selon la revendication 11 ou 12, dans lequel les premier et second convoyeurs (6, 7) présentent des virages sensiblement coaxiaux l'un par rapport à l'autre ; en particulier, le premier convoyeur (6) présente une pluralité de premiers virages ; le second convoyeur (7) présente une pluralité de seconds virages présentant le même rayon et la même distance que les premiers virages.

14. Ensemble convoyeur (3) selon l'une quelconque des revendications 11 à 13, dans lequel l'ensemble convoyeur (3) comprend un premier dispositif de jonction (9'), qui est configuré pour permettre aux articles (2) de se déplacer du premier convoyeur (6) vers l'ensemble convoyeur de transfert (8) et est mobile sur le premier convoyeur (6) ; et un second dispositif de jonction (10'), qui est configuré pour permettre aux articles (2) de se déplacer de l'ensemble convoyeur de transfert (8) vers le second convoyeur (7) et est mobile sur le second convoyeur (7) ;
ladite première extrémité (E) étant reliée au premier dispositif de jonction (9') de manière sensiblement intégrale ; en particulier, ladite autre extrémité (E') étant reliée au second dispositif de jonction (10') de manière sensiblement intégrale.

15. Méthode de convoyage d'articles (2), en particulier d'articles sensiblement cylindriques de l'industrie de transformation du tabac, d'une station d'entrée (4) à une station de sortie (5) le long d'un chemin (P) de longueur variable ;
la méthode comprend :
une étape de transfert, au cours de laquelle un ensemble convoyeur de transfert (8) transporte les articles (2) le long d'un segment de transfert (IS) du chemin (P) d'une entrée (9) à une sortie (10) ;
le segment de transfert (IS) présente au moins un segment intermédiaire (IS') de longueur variable, le long duquel l'ensemble convoyeur de transfert (8) convoie les articles (2) dans une direction donnée (D) ;
l'ensemble convoyeur de transfert (8) comprend au moins un élément de transport (11), en particulier une courroie et/ou une chaîne, qui accompagne au moins partiellement les articles (2) le long d'au moins une partie du segment intermédiaire (IS') et présente une face avant, qui entre en contact avec au moins une partie des articles (2), ainsi qu'une face arrière sensiblement opposée à la face avant, et au moins une paroi (W), qui est agencée derrière l'élément de transport (11) et présente au moins un élément oblong (ES), qui supporte l'élément de transport (11) par l'arrière ;
ledit élément oblong (ES) présentant une première extrémité (E) reliée à ladite entrée (9) ou à ladite sortie (10) de manière sensiblement intégrale ;
la méthode comprend en outre une étape de déplacement, au cours de laquelle un ensemble de déplacement (12) déplace ladite entrée (9) et/ou ladite sortie (10) de manière à modifier la longueur du segment intermédiaire (IS') et la position de ladite première extrémité (E) dans ladite direction donnée (D) ;
l'ensemble de déplacement (12) comprenant un dispositif déflecteur (DD), qui, lors de ladite étape de déplacement, plie ledit élément oblong (ES) de manière à modifier une longueur de l'élément oblong (ES) dans la direction donnée (D).

16. Méthode selon la revendication 15, dans laquelle le dispositif déflecteur (DD), lors de ladite étape de déplacement, plie ledit élément oblong (ES) de sorte qu'au moins un segment d'extrémité de l'élément oblong (ES) opposé à l'extrémité (E) ne s'étende pas dans la direction donnée (D) ; l'étape de déplacement est au moins partiellement simultanée à l'étape de transfert et, en particulier, au moins partiellement simultanée à la première étape de convoyage.

17. Méthode selon la revendication 15 ou 16, dans laquelle le dispositif déflecteur (DD) comprend, en particulier est, un enrouleur qui, lors de ladite étape de déplacement, enroule ledit segment d'extrémité de l'élément oblong (ES) et déroule ledit segment d'extrémité de l'élément oblong (ES).

18. Méthode selon l'une quelconque des revendications 15 à 17, dans laquelle l'ensemble convoyeur de transfert (8) comprend au moins une autre paroi (W'), qui est agencée derrière l'élément de transport (11) et présente au moins un autre élément oblong (ES') présentant une autre extrémité (E') reliée à ladite sortie (10) de manière sensiblement intégrale ;
l'ensemble de déplacement (12) comprenant un autre dispositif déflecteur (DD'), qui plie ledit autre élément oblong (ES') de sorte qu'un segment d'extrémité dudit autre élément oblong (ES') opposé à ladite autre extrémité (E') ne s'étende pas dans la direction donnée (D) ;
ladite première extrémité (E) étant reliée à ladite entrée (9) de manière sensiblement intégrale ;
ledit élément oblong (ES) et ledit autre élément oblong (ES') étant disposés l'un après l'autre le long du segment intermédiaire (IS') ;
en particulier, ledit autre dispositif déflecteur (DD') comprend, en particulier est, un autre enrouleur qui enroule ledit segment d'extrémité dudit autre élément oblong (ES') et déroule ledit segment d'extrémité dudit autre élément oblong (ES').

19. Méthode selon la revendication 18, comprenant :
une première étape de convoyage, au cours de laquelle au moins un autre élément de transport (25) d'un premier convoyeur (6) alimente les articles (2) à partir de la station d'entrée (4) le long d'un premier segment (S1) du chemin (P) ;
une seconde étape de convoyage, au cours de laquelle un second convoyeur (7) alimente les articles (2) vers la station de sortie (5) le long d'un second segment (S2) du chemin (P) agencé en aval du premier segment (S1) ;
lors de l'étape de transfert, l'ensemble convoyeur de transfert (8) convoie les articles (2) du premier convoyeur (6) au second convoyeur (7) le long du segment de transfert (IS) du chemin (P) et présente ladite entrée (9) agencée dans la zone du premier segment (S1) et la sortie (10) agencée dans la zone du second segment (S2) de manière à alimenter les articles (2) vers le second convoyeur (7) ;
lors de l'étape de déplacement, l'ensemble de déplacement (12) déplace l'ensemble convoyeur de transfert (8) de manière à déplacer ladite entrée (9) et ladite sortie (10) le long respectivement des premier et second convoyeurs (6, 7) ;
l'ensemble convoyeur (3) comprenant un premier dispositif de jonction (9'), qui permet aux articles (2) de se déplacer du premier convoyeur (6) vers l'ensemble convoyeur de transfert (8) et est mobile sur le premier convoyeur (6) ; et un second dispositif de jonction (10'), qui permet aux articles (2) de se déplacer de l'ensemble convoyeur de transfert (8) vers le second convoyeur (7) et est mobile sur le second convoyeur (7) ;
l'ensemble convoyeur (3) convoie les articles (2) de la station d'entrée (4) à la station de sortie (5) le long du chemin (P) de longueur variable ;
ladite première extrémité (E) se déplaçant de manière sensiblement intégrale vers le premier dispositif de jonction (9') ; en particulier, ladite autre extrémité (E') se déplaçant de manière sensiblement intégrale vers le second dispositif de jonction (10').

20. Méthode selon l'une quelconque des revendications 15 à 19, dans laquelle, lors de l'étape de transfert, l'ensemble convoyeur de transfert (8) convoie les articles (2) le long du segment intermédiaire (IS') au moins partiellement vers le haut.

21. Méthode selon l'une quelconque des revendications 15 à 20 et mise en œuvre au moyen d'un ensemble convoyeur (3) selon l'une quelconque des revendications 1 à 14.
